# EUROPEAN PATENT APPLICATION

(11) **EP 4 481 607 A1**
(43) Date of publication of application: **25.12.2024**
(21) Application number: 23787747.7
(22) Date of filing: 12.04.2023
(51) Int. Cl.: G06F 21/60

(54) **ASYNCHRONOUS AUTHORIZATION METHOD AND SYSTEM, ELECTRONIC DEVICE, AND COMPUTER-READABLE STORAGE MEDIUM**

(30) Priority: 15.04.2022 CN 202210402232
(71) Applicant: Huawei Technologies Co., Ltd., Shenzhen, Guangdong 518129 (CN)
(72) Inventor: ZHONG, Zejia, Shenzhen, Guangdong 518129 (CN)
(74) Representative: Isarpatent
(86) International application number: PCT/CN2023/087807
(87) International publication number: WO 2023/198104

(57) **Abstract**

This application is applicable to the field of terminal technologies, and provides an asynchronous authorization method and system, an electronic device, and a computer-readable storage medium. In the method, when a third-party application on a first electronic device needs to obtain a user authorization, the first electronic device may perform asynchronous authorization by using a second electronic device having a large-size display. In this way, the second electronic device having the large-size display is used to display an authorization page. Therefore, a user conveniently authorizes the third-party application on the first electronic device by using the authorization page displayed on the second electronic device. This improves convenience of authorizing the third-party application on the first electronic device, improves authorization efficiency, and improves user experience.

## Description

This application claims priority to Chinese Patent Application No. 202210402232.4, filed with the China National Intellectual Property Administration on April 15, 2022 and entitled "ASYNCHRONOUS AUTHORIZATION METHOD AND SYSTEM, ELECTRONIC DEVICE, AND COMPUTER-READABLE STORAGE MEDIUM", which is incorporated herein by reference in its entirety.

### TECHNICAL FIELD

This application relates to the field of terminal technologies, and in particular, to an asynchronous authorization method and system, an electronic device, and a computer-readable storage medium.

### BACKGROUND

After being authorized by a user, a third-party application on an electronic device may access user data, for example, access data stored by the user in a cloud server. Currently, the third-party application may obtain a user authorization by using an open authorization (Open Authorization, OAuth) protocol. According to the OAuth protocol, an authorization page with a large amount of content generally needs to be loaded, so that the user can perform authorization based on the authorization page. However, a wearable device like a smartwatch or a smart band generally has a small display and poor display and touch control capabilities. This affects display of the authorization page, and affects authorization on a third-party application on the wearable device like the smartwatch or the smart band, resulting in poor user experience.

### SUMMARY

Embodiments of this application provide an asynchronous authorization method and system, an electronic device, and a computer-readable storage medium, to resolve a problem that display of an authorization page on a current wearable device is limited, which affects authorization on a third-party application, and results in poor user experience.

According to a first aspect, an embodiment of this application provides an asynchronous authorization system. The system includes a first electronic device, a second electronic device, and an authorization server.

The first electronic device is configured to send a device code request to the authorization server when a third-party application on the first electronic device needs to obtain a user authorization.

The authorization server is configured to: generate, based on the device code request, a device code and a user code that correspond to the third-party application, and a uniform resource locator URL corresponding to an authorization page, and send, to the first electronic device, the device code, the user code, and the URL corresponding to the authorization page.

The first electronic device is further configured to send, to the second electronic device, the user code and the URL corresponding to the authorization page.

The second electronic device is configured to send an authorization page request to the authorization server based on the user code and the URL corresponding to the authorization page.

The authorization server is further configured to: generate the authorization page based on the authorization page request, and send the authorization page to the second electronic device. The authorization page includes a permission that needs to be granted to the third-party application and a selection button corresponding to each permission.

The second electronic device is further configured to: display the authorization page, obtain, in response to a selection operation on the permission displayed on the authorization page, a permission that a user agrees to grant, and send, to the authorization server, the permission that the user agrees to grant.

The first electronic device is further configured to send an authorization code request to the authorization server. The authorization code request carries the device code.

The authorization server is further configured to: after obtaining the authorization code request, determine, based on the device code, the permission that the user agrees to grant, generate an authorization code based on the permission that the user agrees to grant, and send the authorization code to the first electronic device.

According to the foregoing asynchronous authorization system, when the third-party application on the first electronic device needs to obtain a user authorization, the first electronic device can send the device code request to the authorization server. The authorization server can generate, based on the device code request, a device code and a user code that currently correspond to the third-party application, the URL corresponding to the authorization page, and the like, and can send, to the first electronic device, the device code, the user code, the URL corresponding to the authorization page, and the like. Subsequently, the first electronic device can send, to the second electronic device, the user code and the URL corresponding to the authorization page. The second electronic device can request the authorization page from the authorization server based on the user code and the URL corresponding to the authorization page, and display the obtained authorization page. In this way, the user can authorize the third-party application based on the authorization page displayed by the second electronic device. After obtaining the user authorization, the second electronic device can send, to the authorization server, the permission that the user agrees to grant. After sending, to the second electronic device, the user code and the URL corresponding to the authorization page, the first electronic device can send the authorization code request to the authorization server based on the device code. The authorization server can obtain, based on the authorization code request, information such as the permission that the user agrees to grant, generate the authorization code based on the information such as the permission that the user agrees to grant, and send the authorization code to the first electronic device, to complete authorization on the third-party application on the first electronic device. In this way, the third-party application on the first electronic device can access, based on the authorization code, data authorized by the user.

In other words, according to the foregoing asynchronous authorization system, the first electronic device having a small-size display can perform asynchronous authorization on the third-party application on the first electronic device by using the second electronic device having a large-size display. In this way, the second electronic device having the large-size display is used to display the authorization page. Therefore, the user conveniently authorizes the third-party application by using the authorization page displayed on the second electronic device. This can improve convenience of authorizing the third-party application on the first electronic device with the small-size display, improve authorization efficiency, and improve user experience.

In an example, the authorization server includes at least a first interface, a second interface, a third interface, and a fourth interface.

The first interface is configured to send the device code request to the authorization server. The second interface is configured to send the authorization page request to the authorization server. The third interface is configured to send, to the authorization server, the permission that the user agrees to grant. The fourth interface is configured to send the authorization code request to the authorization server.

In the asynchronous authorization system provided in this implementation, the authorization server can provide a plurality of interfaces. In this way, the authorization code request and return of the authorization page do not need to depend on a same interface. Therefore, the second electronic device can be used to obtain and display the authorization page, to implement asynchronous authorization on the third-party application on the first electronic device by using the second electronic device. This improves user experience.

For example, the authorization server generates the user code in a random manner.

For example, the device code request carries a client identifier of the third-party application. The authorization server combines the user code and the client identifier of the third-party application in a preset combination manner, to obtain combination information, and encrypts the combination information by using a preset encryption algorithm, to obtain the device code.

It should be understood that a length of the user code, the preset combination manner, and the preset encryption algorithm can be specifically set based on an actual scenario.

In an example, the device code request carries the permission that needs to be granted to the third-party application. After generating, based on the device code request, the device code, the user code, and the URL corresponding to the authorization page, the authorization server performs, associated storage on the user code, the permission that needs to be granted to the third-party application, and the URL corresponding to the authorization page.

In the asynchronous authorization system provided in this implementation, after obtaining the device code request, the authorization server can generate the current device code and user code of the third-party application, and determine the URL corresponding to the authorization page, a generation time of the user code, an expiration time of the device code, an expiration time of the user code, and the like, and can establish storage space, to associatively store, in the storage space, information such as the user code, the generation time of the user code, the expiration time of the user code, the device code, the expiration time of the device code, the client identifier of the third-party application, the permission that needs to be granted to the third-party application, and a user identifier. During storage, the authorization server can store, in the storage space as a value in a key-value form by using the user code as a key, the information such as the generation time of the user code, the expiration time of the user code, the device code, the expiration time of the device code, the client identifier of the third-party application, the permission that needs to be granted to the third-party application, and the user identifier.

In a possible implementation, the authorization server is further configured to: determine, based on the user code in the authorization page request, the permission that needs to be granted to the third-party application, and generate the authorization page based on the permission that needs to be granted to the third-party application.

In the asynchronous authorization system provided in this implementation, after obtaining the authorization page request of the second electronic device, based on the user code in the authorization page request, the authorization server can obtain, from the storage space corresponding to the user code, information such as the client identifier of the third-party application and the permission that needs to be granted to the third-party application, and generate the authorization page based on information such as the client identifier of the third-party application and the permission that needs to be granted to the third-party application.

In another possible implementation, the authorization server is specifically configured to: after obtaining the authorization code request, determine the user code based on the device code, determine, based on the user code, the permission that the user agrees to grant, and generate the authorization code based on the permission that the user agrees to grant.

In the asynchronous authorization system provided in this implementation, after obtaining the authorization code request sent by the first electronic device, the authorization server can obtain, based on the device code in the authorization code request, the user code corresponding to the device code, for example, can decrypt the device code based on the preset encryption algorithm, to obtain decrypted information, and extract the user code from the decrypted information in the preset combination manner. Subsequently, the authorization server can determine, based on the user code, whether the user authorization is already obtained, that is, determine, based on the user code, whether the storage space corresponding to the user code stores the permission that the user agrees to grant.

When the storage space corresponding to the user code stores the permission that the user agrees to grant, the authorization server can determine that the user authorization is already obtained. In this case, the authorization server can obtain, based on the user code, information such as the user identifier, the permission that the user agrees to grant, and the client identifier of the third-party application, and generate the authorization code based on the information such as the user identifier, the permission that the user agrees to grant, and the client identifier of the third-party application.

In an example, a size of the display of the first electronic device is less than a size of the display of the second electronic device.

In the asynchronous authorization system provided in this implementation, the first electronic device with the small-size display can perform asynchronous authorization on the third-party application on the first electronic device by using the second electronic device having the large-size display. In this way, the second electronic device having the large-size display is used to display the authorization page. Therefore, the user conveniently authorizes the third-party application by using the authorization page displayed on the second electronic device. This can improve convenience of authorizing the third-party application on the first electronic device. This improves authorization efficiency, and improves user experience.

In another example, a user account for logging in to the second electronic device is a target account. The target account is an account that has an authorization permission for data that the third-party application requests to access.

In the asynchronous authorization system provided in this implementation, the user account for logging in to the second electronic device is the target account. The target account is the account that has the authorization permission for the data that the third-party application requests to access. This prevents a user who has no authorization permission on the data that the third-party application requests to access from assisting in authorization, thereby avoiding data leakage, ensuring data privacy, and protecting user privacy.

In another example, a distance between the first electronic device and the second electronic device is less than or equal to a preset distance threshold.

In the asynchronous authorization system provided in this implementation, the first electronic device can determine, as the second electronic device based on the distance, an electronic device that is most likely to be currently used by the user. In this way, the user conveniently performs asynchronous authorization on the third-party application on the first electronic device by using the second electronic device. This improves authorization efficiency.

According to a second aspect, an embodiment of this application provides an asynchronous authorization method, applied to a first electronic device. The method may include:
sending a device code request to an authorization server when a third-party application on the first electronic device needs to obtain a user authorization;
obtaining a device code, a user code, and a URL corresponding to an authorization page that are returned by the authorization server, where the device code, the user code, and the URL corresponding to the authorization page are determined by the authorization server based on the device code request;
sending, to a second electronic device, the user code and the URL corresponding to the authorization page; and
sending an authorization code request to the authorization server, and obtaining an authorization code returned by the authorization server, where the authorization code request carries the device code.

The authorization code is generated by the authorization server based on a permission that a user agrees to grant and that is determined based on the device code after the authorization code request is obtained, the permission that the user agrees to grant is determined by the second electronic device based on a selection operation corresponding to a permission displayed on the authorization page, and the authorization page is generated by the authorization server based on the user code and the URL corresponding to the authorization page that are sent by the second electronic device.

In the foregoing asynchronous authorization method, when the third-party application on the first electronic device needs to obtain the user authorization, the first electronic device can perform asynchronous authorization on the third-party application on the first electronic device by using the second electronic device having a large-size display. In this way, the second electronic device having the large-size display is used to display the authorization page. Therefore, the user conveniently authorizes the third-party application by using the authorization page displayed on the second electronic device. This can improve convenience of authorizing the third-party application on the first electronic device, improve authorization efficiency, and improve user experience.

In an example, the sending, to a second electronic device, the user code and the URL corresponding to the authorization page may include:
determining the second electronic device, and displaying an authorization guide page based on the second electronic device, where the authorization guide page is used to guide the user to the second electronic device for authorization; and
sending, to the second electronic device in response to a confirmation operation detected on the authorization guide page, the user code and the URL corresponding to the authorization page.

In the asynchronous authorization method provided in this implementation, when the third-party application on the first electronic device needs to obtain the user authorization, the first electronic device may first determine the second electronic device. Then, the first electronic device can display the authorization guide page based on the determined second electronic device, to guide the user to authorize, on the second electronic device, the third-party application on the first electronic device. In this way, the user conveniently performs asynchronous authorization on the third-party application on the first electronic device in time by using the second electronic device. This improves authorization efficiency.

In a possible implementation, the determining the second electronic device may include:
determining at least one third electronic device connected to the first electronic device;
obtaining a user account for logging in to each third electronic device; and
determining, from the third electronic device, at least one fourth electronic device whose user account is a target account, and determining the second electronic device based on the at least one fourth electronic device, where the target account is an account that has an authorization permission for data that the third-party application requests to access.

In another possible implementation, the determining the second electronic device may include:
determining the at least one third electronic device connected to the first electronic device; and
obtaining a distance between the first electronic device and each third electronic device, and determining, as the second electronic device, a third electronic device whose distance is less than or equal to a preset distance threshold, or determining, as the second electronic device, a third electronic device whose distance is smallest.

In another possible implementation, the determining the second electronic device may include:
determining the at least one third electronic device connected to the first electronic device; and
obtaining a signal strength of each third electronic device, and determining, as the second electronic device, a third electronic device whose signal strength is greater than a preset strength threshold, or determining, as the second electronic device, a third electronic device whose signal strength is greatest.

In the asynchronous authorization method provided in this implementation, the first electronic device can determine, as the second electronic device, the third electronic device whose signal strength is greater than the preset strength threshold, or determine, as the second electronic device, the third electronic device whose signal strength is greatest, to determine, as the second electronic device based on the signal strength, a third electronic device that receives the authorization page most quickly. In this way, the user conveniently performs asynchronous authorization on the third-party application on the first electronic device by using the second electronic device. This improves authorization efficiency, and improves user experience.

In another possible implementation, the determining the second electronic device may include:
determining the at least one third electronic device connected to the first electronic device;
obtaining a use status of each third electronic device, and determining a priority corresponding to each use status; and
determining, as the second electronic device, a third electronic device with a highest priority.

In the asynchronous authorization method provided in this implementation, the first electronic device can determine, as the second electronic device, one or more third electronic devices with highest priorities, to determine, as the second electronic device, a third electronic device that is most likely to be used by the user currently. In this way, the user conveniently performs asynchronous authorization on the third-party application on the first electronic device in time by using the second electronic device. This improves authorization efficiency.

According to a third aspect, an embodiment of this application provides an asynchronous authorization method, applied to a second electronic device. The method may include:
obtaining a user code and a URL corresponding to an authorization page that are sent by a first electronic device, where the user code and the URL corresponding to the authorization page are determined by an authorization server based on a device code request of the first electronic device, and the device code request is sent by the first electronic device to the authorization server when it is determined that a third-party application on the first electronic device needs to obtain a user authorization;
sending an authorization page request to the authorization server based on the user code and the URL corresponding to the authorization page;
obtaining an authorization page returned by the authorization server based on the authorization page request, where the authorization page includes a permission that needs to be granted to the third-party application and a selection button corresponding to each permission;
displaying the authorization page, and obtaining, in response to a selection operation on the permission displayed on the authorization page, a permission that a user agrees to grant; and
sending, to the authorization server, the permission that the user agrees to grant, where the permission that the user agrees to grant is used by the authorization server to generate an authorization code corresponding to the third-party application.

According to a fourth aspect, an embodiment of this application provides an asynchronous authorization apparatus, applied to a first electronic device. The apparatus may include:
a device code request sending module, configured to send a device code request to an authorization server when a third-party application on the first electronic device needs to obtain a user authorization;
a device code obtaining module, configured to obtain a device code, a user code, and a URL corresponding to an authorization page that are returned by the authorization server, where the device code, the user code, and the URL corresponding to the authorization page are determined by the authorization server based on the device code request;
a user code sending module, configured to send, to a second electronic device, the user code and the URL corresponding to the authorization page; and
an authorization code obtaining module, configured to: send an authorization code request to the authorization server, and obtain an authorization code returned by the authorization server, where the authorization code request carries the device code.

The authorization code is generated by the authorization server based on a permission that a user agrees to grant and that is determined based on the device code after the authorization code request is obtained. The permission that the user agrees to grant is determined by the second electronic device based on a selection operation corresponding to a permission displayed on the authorization page. The authorization page is generated by the authorization server based on the user code and the URL corresponding to the authorization page that are sent by the second electronic device.

In an example, the user code sending module may include:
a device determining unit, configured to: determine the second electronic device, and display an authorization guide page based on the second electronic device, where the authorization guide page is used to guide the user to the second electronic device for authorization; and
a user code sending unit, configured to send, to the second electronic device in response to a confirmation operation detected on the authorization guide page, the user code and the URL corresponding to the authorization page.

In a possible implementation, the device determining unit is specifically configured to: determine at least one third electronic device connected to the first electronic device; obtain a user account for logging in to each third electronic device; and determine, from the third electronic device, at least one fourth electronic device whose user account is a target account, and determine the second electronic device based on the at least one fourth electronic device, where the target account is an account that has an authorization permission for data that the third-party application requests to access.

In another possible implementation, the device determining unit is further configured to: determine the at least one third electronic device connected to the first electronic device; obtain a distance between the first electronic device and each third electronic device, and determine, as the second electronic device, a third electronic device whose distance is less than or equal to a preset distance threshold, or determine, as the second electronic device, a third electronic device whose distance is smallest.

In another possible implementation, the device determining unit is further configured to: determine the at least one third electronic device connected to the first electronic device; obtain a signal strength of each third electronic device, and determine, as the second electronic device, a third electronic device whose signal strength is greater than a preset strength threshold, or determine, as the second electronic device, a third electronic device whose signal strength is greatest.

In another possible implementation, the device determining unit is further configured to: determine the at least one third electronic device connected to the first electronic device; obtain a use status of each third electronic device, and determine a priority corresponding to each use status; and determine, as the second electronic device, a third electronic device with a highest priority.

According to a fifth aspect, an embodiment of this application provides an asynchronous authorization apparatus, applied to a second electronic device. The apparatus may include:
a user code obtaining module, configured to obtain a user code and a URL corresponding to an authorization page that are sent by a first electronic device, where the user code and the URL corresponding to the authorization page are determined by an authorization server based on a device code request of the first electronic device, and the device code request is sent by the first electronic device to the authorization server when it is determined that a third-party application on the first electronic device needs to obtain a user authorization;
an authorization page request module, configured to send an authorization page request to the authorization server based on the user code and the URL corresponding to the authorization page;
an authorization page obtaining module, configured to obtain an authorization page returned by the authorization server based on the authorization page request, where the authorization page includes a permission that needs to be granted to the third-party application and a selection button corresponding to each permission;
an authorization page displaying module, configured to: display the authorization page, and obtain, in response to a selection operation on the permission displayed on the authorization page, a permission that a user agrees to grant; and
a permission sending module, configured to send, to the authorization server, the permission that the user agrees to grant, where the permission that the user agrees to grant is used by the authorization server to generate an authorization code corresponding to the third-party application.

According to a sixth aspect, an embodiment of this application provides an electronic device, including a memory, a processor, and a computer program that can be run on the processor and that is stored in the memory. When the processor executes the computer program, the electronic device is enabled to implement the asynchronous granting method according to any one in the second aspect, or implement the asynchronous authorization method according to the third aspect.

According to a seventh aspect, an embodiment of this application provides a computer-readable storage medium. The computer-readable storage medium stores a computer program. When the computer program is executed by a computer, the computer is enabled to implement the asynchronous authorization method according to any one in the second aspect, or implement the asynchronous authorization method according to the third aspect.

According to an eighth aspect, an embodiment of this application provides a computer program product. When the computer program product runs on an electronic device, the electronic device is enabled to perform the asynchronous authorization method according to any one in the second aspect, or perform the asynchronous authorization method according to the third aspect.

It may be understood that, for beneficial effects of the third aspect to the eighth aspect, refer to the related descriptions in the first aspect and the second aspect. Details are not described herein again.

### BRIEF DESCRIPTION OF DRAWINGS

FIG. 1 is a diagram of a structure of an electronic device to which an asynchronous authorization method is applicable according to an embodiment of this application;
FIG. 2 is a diagram of a software architecture to which an asynchronous authorization method is applicable according to an embodiment of this application;
FIG. 3 is a schematic flowchart of an authorization method;
FIG. 4 is an example diagram of an authorization page;
FIG. 5(a) to FIG. 5(c) are an example diagram of an authorization page according to an embodiment of this application;
FIG. 6A and FIG. 6B are a schematic flowchart of an asynchronous authorization method according to an embodiment of this application;
FIG. 7 is a diagram of a structure of a system to which an asynchronous authorization method is applicable according to an embodiment of this application; and
FIG. 8(a) to FIG. 9(f) are diagrams of an application scenario according to an embodiment of this application.

### DESCRIPTION OF EMBODIMENTS

It should be understood that, when being used in the specification and the appended claims of this application, the term "include" indicates presence of described features, entireties, steps, operations, elements, and/or components, but does not exclude presence or addition of one or more other features, entireties, steps, operations, elements, components, and/or sets thereof.

It should also be understood that the term "and/or" used in the specification and the appended claims of this application means any combination and all possible combinations of one or more associated listed items, and includes these combinations.

In addition, in descriptions of the specification and the appended claims of this application, the terms "first", "second", "third", and the like are merely intended for a purpose of distinction and description, but shall not be understood as an indication or an implication of relative importance.

Reference to "an embodiment", "some embodiments", or the like described in the specification of this application means that one or more embodiments of this application include a specific feature, structure, or feature described with reference to the embodiment. Therefore, statements such as "in an embodiment", "in some embodiments", "in some other embodiments", and "in other embodiments" that appear in different places in this specification do not necessarily mean referring to a same embodiment. Instead, the statements mean "one or more but not all of embodiments", unless otherwise specifically emphasized in another manner. The terms "include", "comprise", "have", and variants of the terms all mean "include but not limited to", unless otherwise specifically emphasized in other ways.

In addition, "a plurality of" mentioned in embodiments of this application should be interpreted as two or more.

Steps in an asynchronous authorization method provided in embodiments of this application are merely examples. Not all steps are mandatory, or not all content in each piece of information or each message is mandatory. The steps or the content may be added or reduced as required in a use process. A same step or steps or messages having a same function in embodiments of this application may be mutually referenced in different embodiments.

A service scenario described in embodiments of this application is intended to describe the technical solutions in embodiments of this application more clearly, and constitutes no limitation on the technical solutions provided in embodiments of this application. Persons of ordinary skill in the art may learn that, with evolution of a network architecture and emergence of a new service scenario, the technical solutions provided in embodiments of this application are also applicable to similar technical problems.

After being authorized by a user, a third-party application on an electronic device may access user data, for example, access data stored by the user in a server. The third-party application may obtain a user authorization by using an open authorization (Open Authorization, OAuth) protocol. According to the OAuth protocol, an authorization page with a large amount of content generally needs to be loaded, so that the user can perform authorization based on the authorization page. However, a wearable device like a smartwatch or a smart band has a small display and poor display and touch control capabilities. This affects display of the authorization page, and affects authorization on the third-party application on the wearable device like the smartwatch or the smart band, resulting in poor user experience.

To resolve the foregoing problems, embodiments of this application provide an asynchronous authorization method, an electronic device, and a computer-readable storage medium. In the method, when a third-party application on a wearable device (referred to as a first electronic device below) like a smartwatch or a smart band needs to obtain a user authorization, the first electronic device may send a device code request to an authorization server. The authorization server may generate, based on the device code request, a device code and a user code that currently correspond to the third-party application, a URL corresponding to the authorization page, and the like, and may send, to the first electronic device, the device code, the user code, the URL corresponding to the authorization page, and the like. Subsequently, the first electronic device may send, to a second electronic device, the user code and the URL corresponding to the authorization page. The second electronic device may request the authorization page from the authorization server based on the user code and the URL corresponding to the authorization page, and display the obtained authorization page. In this way, the user can authorize the third-party application based on the authorization page displayed by the second electronic device. After obtaining the user authorization, the second electronic device may send, to the authorization server, a permission that the user agrees to grant. After sending, to the second electronic device, the user code and the URL corresponding to the authorization page, the first electronic device may send an authorization code request to the authorization server based on the device code. The authorization server may obtain, based on the authorization code request, the permission that the user agrees to grant, generate an authorization code based on information such as the permission that the user agrees to grant, and send the authorization code to the first electronic device, to complete authorization on the third-party application on the first electronic device. In this way, the third-party application on the first electronic device can access, based on the authorization code, data authorized by the user.

In other words, in embodiments of this application, the first electronic device having a small-size display can perform asynchronous authorization on the third-party application on the first electronic device by using the second electronic device having a large-size display. In this way, the second electronic device having the large-size display is used to display the authorization page. Therefore, the user conveniently authorizes the third-party application by using the authorization page displayed on the second electronic device. This can improve convenience of authorizing the third-party application on the first electronic device having the small-size display, improve authorization efficiency, improve user experience, and have high usability and practicability.

In an embodiment of this application, the first electronic device can be a wearable device having a small-size display, for example, the smartwatch or the smart band. The second electronic device can be an electronic device having a large-size display, for example, a mobile phone, a tablet computer, an in-vehicle device, a notebook computer, an ultra-mobile personal computer (ultra-mobile personal computer, UMPC), a netbook, a desktop computer, a smart television, or a large smart screen. A specific type of an electronic device (including the first electronic device and the second electronic device) is not limited in embodiments of this application.

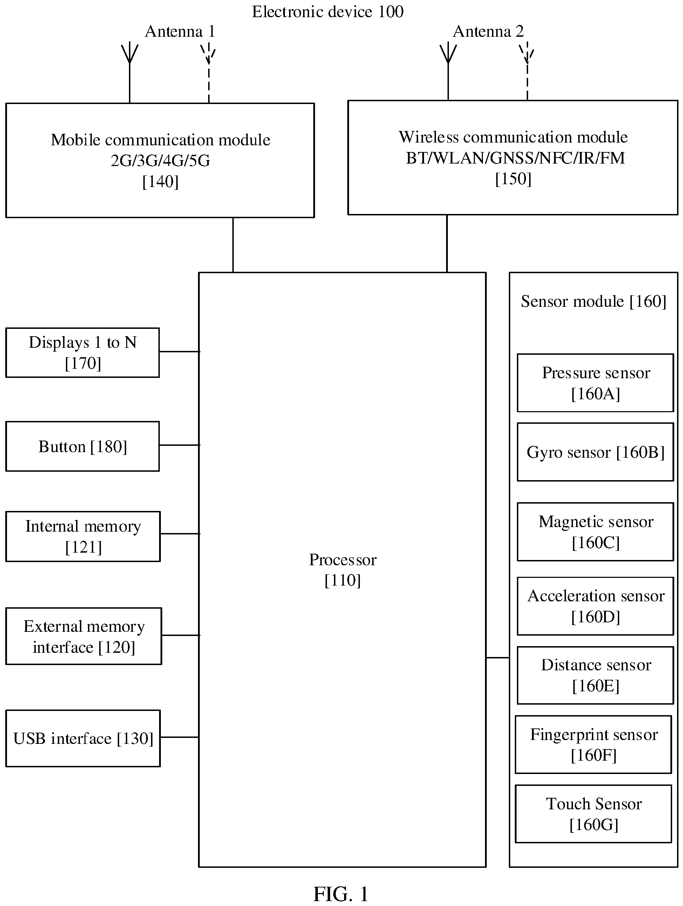

The following first describes the electronic device in embodiments of this application. FIG. 1 is a schematic diagram of a structure of an electronic device 100.

As shown in FIG. 1, the electronic device 100 may include a processor 110, an external memory interface 120, an internal memory 121, a universal serial bus (universal serial bus, USB) interface 130, an antenna 1, an antenna 2, a mobile communication module 140, a wireless communication module 150, a sensor module 160, a button 180, a display 170, and the like. The sensor module 160 may include a pressure sensor 160A, a gyro sensor 160B, a magnetic sensor 160C, an acceleration sensor 160D, a distance sensor 160E, a fingerprint sensor 160F, a touch sensor 160G, and the like.

It may be understood that the structure shown in this embodiment of this application constitutes no specific limitation on the electronic device 100. In some other embodiments of this application, the electronic device 100 may include more or fewer components than those shown in the figure, or combine of some of components, or split of some of components, or have different layouts of the components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), and/or a baseband processor, a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to a touch sensor 160G and the like through different I2C bus interfaces. For example, the processor 110 may be coupled to the touch sensor 160G through the I2C interface, so that the processor 110 communicates with the touch sensor 160G through the I2C bus interface, to implement a touch function of the electronic device 100.

The UART interface is a universal serial data line, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 150. For example, the processor 110 communicates with a Bluetooth module in the wireless communication module 150 through the UART interface, to implement a Bluetooth function. The MIPI interface may be configured to connect the processor 110 to a peripheral component like the display 170 or a keyboard. The MIPI interface includes a display serial interface (display serial interface, DSI) and the like. In some embodiments, the processor 110 communicates with the display 170 through the DSI interface, to implement a display function of the electronic device 100.

The GPIO interface may be configured by using software. The GPIO interface may be configured as a control signal or a data signal. In some embodiments, the GPIO interface may be configured to connect the processor 110 to the display 170, the wireless communication module 150, the sensor module 160, and the like. The GPIO interface may be alternatively configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to perform data transmission between the electronic device 100 and a peripheral device. The interface may be alternatively configured to connect to another electronic device like an AR device.

It may be understood that an interface connection relationship between the modules illustrated in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented by using the antenna 1, the antenna 2, the mobile communication module 140, the wireless communication module 150, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be multiplexed to improve antenna utilization. For example, the antenna 1 may be multiplexed as a diversity antenna of a wireless local area network. In some other embodiments, the antenna may be used in combination with a tuning switch.

The mobile communication module 140 may provide a solution that is applied to the electronic device 100 and that includes wireless communication such as 2G, 3G, 4G, and 5G. The mobile communication module 140 may include at least one filter, a switch, a power amplifier, a low noise amplifier (low noise amplifier, LNA), and the like. The mobile communication module 140 may receive an electromagnetic wave through the antenna 1, perform processing such as filtering or amplification on the received electromagnetic wave, and transmit a processed electromagnetic wave to the modem processor for demodulation. The mobile communication module 140 may further amplify a signal modulated by the modem processor, and convert an amplified signal into an electromagnetic wave for radiation through the antenna 1. In some embodiments, at least some functional modules of the mobile communication module 140 may be disposed in the processor 110. In some embodiments, at least some functional modules of the mobile communication module 140 and at least some modules of the processor 110 may be disposed in a same component.

The modem processor may include a modulator and a demodulator. The modulator is configured to modulate a to-be-sent low-frequency baseband signal into a medium/highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transferred to the application processor. The application processor displays an image or a video through the display 170. In some embodiments, the modem processor may be an independent component. In some other embodiments, the modem processor may be independent of the processor 110, and is disposed in a same component as the mobile communication module 140 or another functional module.

The wireless communication module 150 may provide a solution that is applied to the electronic device 100 and that includes wireless communication such as a wireless local area network (wireless local area network, WLAN) (for example, a wireless fidelity (wireless fidelity, Wi-Fi) network or Wi-Fi direct (Wi-Fi peer-to-peer, Wi-Fi p2p)), Bluetooth (Bluetooth, BT), ultra-wideband (ultra-wideband, UWB), a global navigation satellite system (global navigation satellite system, GNSS), frequency modulation (frequency modulation, FM), near field communication (near-field communication, NFC), and an infrared (infrared, IR) technology. The wireless communication module 150 may be one or more components integrating at least one communication processing module. The wireless communication module 150 receives an electromagnetic wave through the antenna 2, performs frequency modulation and filtering processing on an electromagnetic wave signal, and sends a processed signal to the processor 110. The wireless communication module 150 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 140 are coupled, and the antenna 2 and the wireless communication module 150 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 170, the application processor, and the like. The GPU is a microprocessor for image processing, and is connected to the display 170 and the application processor. The GPU is configured to: perform mathematical and geometric computation, and render an image. The processor 110 may include one or more GPUs, which execute program instructions to generate or change display information.

The display 170 is configured to display an image, a video, and the like. The display 170 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 170, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the electronic device 100 may be implemented by using the NPU, for example, image recognition, facial recognition, speech recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, an image playing function), and the like. The data storage area may store data created during use of the electronic device 100. In addition, the internal memory 121 may include a high-speed random access memory, and may further include a non-volatile memory, for example, at least one magnetic disk storage component, a flash memory component, or a universal flash storage (universal flash storage, UFS). The processor 110 runs the instructions stored in the internal memory 121 and/or the instructions stored in the memory disposed in the processor, to perform various function applications of the electronic device 100 and data processing.

The pressure sensor 160A is configured to sense a pressure signal, and may convert the pressure signal into an electrical signal. In some embodiments, the pressure sensor 160A may be disposed on the display 170. There are many types of pressure sensors 160A, for example, a resistive pressure sensor, an inductive pressure sensor, and a capacitive pressure sensor. The capacitive pressure sensor may include at least two parallel plates made of a conductive material. When force is applied to the pressure sensor 160A, capacitance between electrodes changes. The electronic device 100 determines pressure intensity based on the change in the capacitance. When a touch operation is performed on the display 170, the electronic device 100 detects intensity of the touch operation by using the pressure sensor 160A. The electronic device 100 may also compute a touch location based on a detection signal of the pressure sensor 160A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to a first pressure threshold is performed on an SMS message application icon, an instruction for creating a new SMS message is performed.

The gyro sensor 160B may be configured to determine a motion posture of the electronic device 100. In some embodiments, angular velocities of the electronic device 100 around three axes (namely, axes x, y, and z) may be determined by using the gyro sensor 160B. The gyro sensor 160B may be configured to implement image stabilization during photographing. The gyro sensor 160B may further be used in a navigation scenario or a somatic game scenario.

The magnetic sensor 160C includes a Hall sensor. The electronic device 100 may detect opening or closing of a flip cover by using the magnetic sensor 160C. In some embodiments, when the electronic device 100 is a flip phone, the electronic device 100 may detect opening or closing of the flip cover by using the magnetic sensor 160C. Further, a feature like automatic unlocking of the flip cover is set based on a detected opening or closing state of the leather case or a detected opening or closing state of the flip cover.

The acceleration sensor 160D may detect magnitude of accelerations in various directions (generally on three axes) of the electronic device 100, may detect magnitude and a direction of gravity when the electronic device 100 is still, and may be further configured to recognize a posture of the electronic device, and is used in screen switching between a landscape mode and a portrait mode, a pedometer, or another application.

The distance sensor 160E is configured to measure a distance. The electronic device 100 may measure the distance in an infrared manner or a laser manner. In some embodiments, in a photographing scenario, the electronic device 100 may measure a distance by using the distance sensor 160E, to implement quick focusing.

The fingerprint sensor 160F is configured to collect a fingerprint. The electronic device 100 may use a feature of the collected fingerprint to implement fingerprint-based unlocking, application lock access, fingerprint-based photographing, fingerprint-based call answering, and the like.

The touch sensor 160G is also referred to as a "touch component". The touch sensor 160G may be disposed on the display 170, and the touch sensor 160G and the display 170 form a touchscreen, which is also referred to as a "touch screen". The touch sensor 160G is configured to detect a touch operation performed on or near the touch sensor 160G. The touch sensor may transfer the detected touch operation to the application processor to determine a type of a touch event. A visual output related to the touch operation may be provided through the display 170. In some other embodiments, the touch sensor 160G may alternatively be disposed on a surface of the electronic device 100 at a location different from a location of the display 170.

The button 180 includes a power button, a volume button, and the like. The button 180 may be a mechanical button or a touch button. The electronic device 100 may receive a key input, and generate a key signal input related to a user setting and function control of the electronic device 100.

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100.

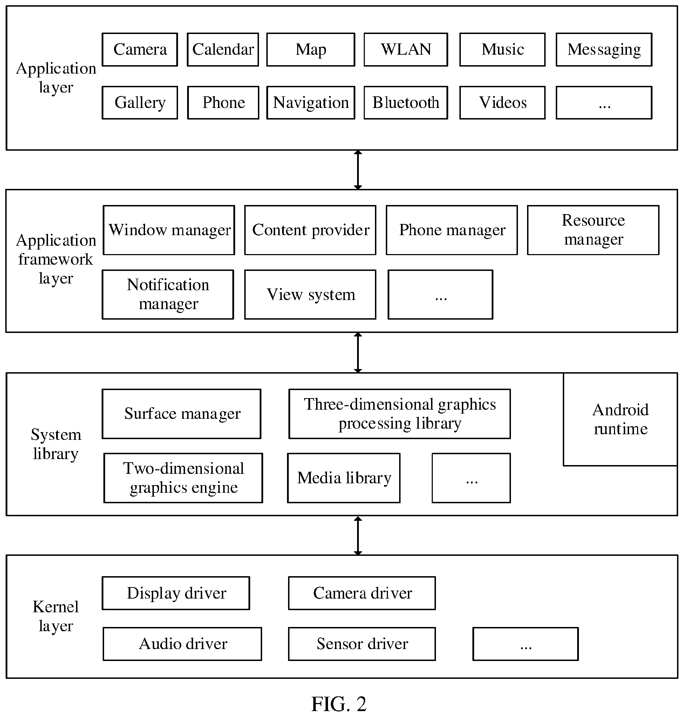

FIG. 2 is a block diagram of the software structure of the electronic device 100 in this embodiment of this application.

In a layered architecture, software is divided into several layers, and each layer has a clear role and task. The layers communicate with each other through a software interface. In some embodiments, the Android system is divided into four layers from top to bottom: an application layer, an application framework layer, an Android runtime (Android runtime) and system library, and a kernel layer.

The application layer may include a series of application packages.

As shown in FIG. 2, the application packages may include applications such as Camera, Gallery, Calendar, Phone, Map, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is used to store and obtain data, and enable the data to be accessed by an application. The data may include a video, an image, an audio, calls that are made and answered, a browsing history and a bookmark, a phone book, and the like.

The view system includes a visual control like a control for displaying a text or a control for displaying an image. The view system may be used to construct an application. A display interface may include one or more views. For example, a display interface including an SMS message notification icon may include a text display view and a picture display view.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in the status bar, may be used to convey a notification message, and may automatically disappear after a short pause without requiring user interaction. For example, the notification manager is used to notify download completion and provide a message notification. The notification manager may alternatively be a notification that appears in a top status bar of the system in a form of a graph or a scroll bar text, for example, a notification of an application that is run in the background, or may be a notification that appears on a screen in a form of a dialog window. For example, text information is displayed in the status bar, an announcement is given, the electronic device vibrates, or an indicator light blinks.

The Android runtime includes a kernel library and a virtual machine. The Android runtime is responsible for scheduling and management of the Android system.

The kernel library includes two parts: function that needs to be called in a Java language and a kernel library of Android.

The application layer and the application framework layer run on the virtual machine. The virtual machine executes Java files at the application layer and the application framework layer as binary files. The virtual machine is used to implement functions such as object lifecycle management, stack management, thread management, security and exception management, and garbage collection.

The system library may include a plurality of functional modules such as a surface manager (surface manager), a media library (Media Library), a three-dimensional graphics processing library (for example, an OpenGL ES), and a 2D graphics engine (for example, an SGL).

The surface manager is used to manage a display subsystem and provide fusion of 2D and 3D layers for a plurality of applications.

The media library supports playback and recording of audios and videos in a plurality of commonly used formats, a static image file, and the like. The media library may support a plurality of audio and video encoding formats such as MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For ease of understanding, the following first describes an OAuth protocol. Because a commonly used OAuth protocol is an OAuth 2.0 protocol, the following uses the OAuth 2.0 protocol as an example for description.

The OAuth 2.0 protocol is a third-party authorization protocol, and is widely used in login authorization of a third-party application. Through authorization based on the OAuth 2.0 protocol, the third-party application may access user-authorized data with high security, without using a user name and a password of a user.

The authorization based on the OAuth 2.0 protocol mainly relates to a resource owner (Resource Owner), a resource server (Resource Server), a client (Client) corresponding to the third-party application, and an authorization server (Authorization Server). The resource owner is a user who has an authorization capability for data. The resource server is configured to store the data of the user and process an access request for the data. The client is an electronic device on which the third-party application is installed. The authorization server is a middle layer that manages a relationship between the resource owner, the client, and the resource server. It should be understood that the authorization server and the resource server may be independent servers, or may be integrated.

Generally, the authorization server may provide an authorization interface and an access token obtaining interface. The authorization interface may be configured to: receive an authorization request of the client to guide the user to an authorization page to complete authorization, and return an authorization code to the client. The access token obtaining interface is configured to issue an access token to the client by using the authorization code provided by the authorization interface, so that the third-party application on the client can access, by using the access token, data stored in the resource server by the resource owner.

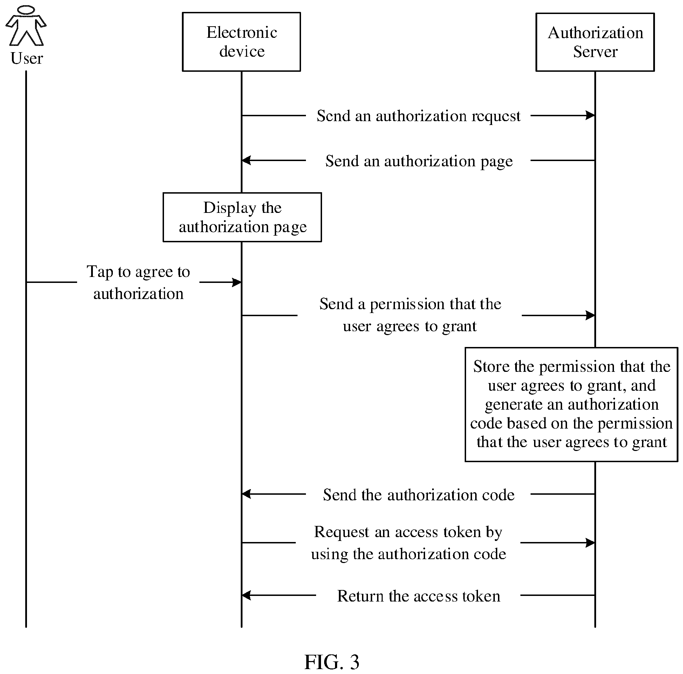

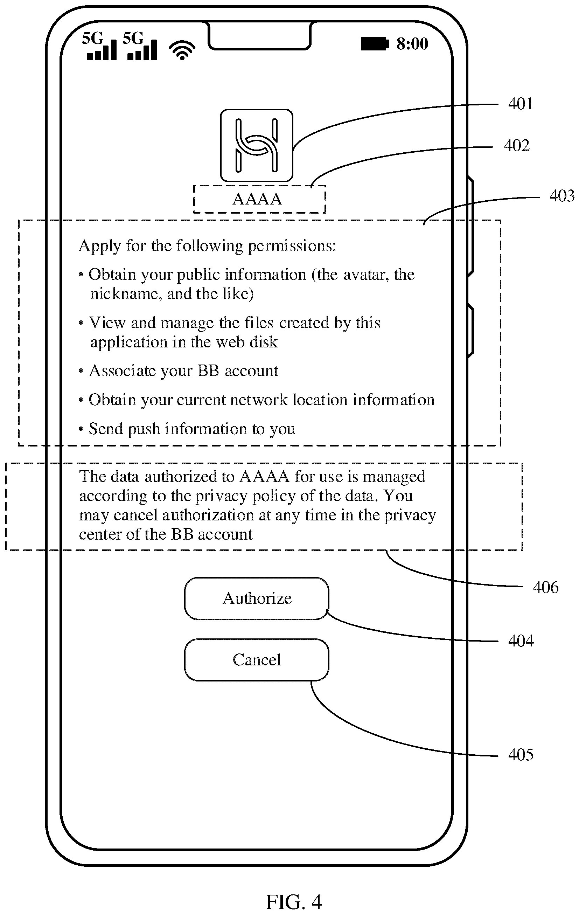

Refer to FIG. 3 and FIG. 4. FIG. 3 is a schematic flowchart of an authorization method. FIG. 4 is an example diagram of an authorization page.

As shown in FIG. 3, when a third-party application on an electronic device needs to obtain an authorization of a user, the electronic device may send an authorization request to an authorization server through an authorization interface. After obtaining the authorization request, the authorization server may generate an authorization page and return the authorization page to the electronic device. The electronic device may display the authorization page, so that the user may authorize the third-party application by using the authorization page.

It should be noted that the authorization server may provide a registration management service for the third-party application. When the third-party application on the electronic device needs to obtain the user authorization, the third-party application on the electronic device needs to register as a third-party application of the authorization server. When registration is completed, the authorization server may provide a client identifier (client_id) of the third-party application for the electronic device, to distinguish the third-party application. Therefore, when sending the authorization request to the authorization server through the authorization interface, the electronic device may use the client identifier of the third-party application as a request parameter corresponding to the authorization interface. The authorization server may determine the third-party application (for example, determine information such as an icon and a name of the third-party application) based on the client identifier of the third-party application in the request parameter, to generate the authorization page corresponding to the third-party application. A registration process of the third-party application may be completed at any time before the authorization request is sent.

As shown in FIG. 4, the authorization page may include an icon 401 and a name 402 (for example, AAAA) of the third-party application, permissions 403 that needs to be granted to the third-party application, an "Authorize" button 404, a "Cancel" button 405, and authorization prompt information 406 (for example, "The data authorized to AAAA for use is managed according to the privacy policy of the data. You may cancel authorization at any time in the privacy center of the BB account"). The BB account may be an account corresponding to the user.

For example, the permissions 403 that needs to be granted to the third-party application may include "Obtain your public information (the avatar, the nickname, and the like)", "View and manage the files created by this application in the web disk", "Associate with your BB account", "Obtain your current network location information", and "Send push information to you".

When the user agrees to authorization, the user may tap the "Authorize" button 404. As shown in FIG. 3, when detecting that the "Authorize" button 404 is triggered, the electronic device may send, to the authorization server, a permission that the user agrees to grant. The authorization server may obtain the permission that the user agrees to grant, store the permission that the user agrees to grant, generate an authorization code based on the permission that the user agrees to grant, and return the authorization code to the electronic device through the authorization interface.

After obtaining the authorization code returned by the authorization server, the electronic device may use information like the authorization code and the client identifier (client_id) as a request parameter, to request an access token from the authorization server through an access token obtaining interface. The authorization server may generate the access token based on the information such as the authorization code and the client identifier, and send information such as the access token and valid duration of the access token to the electronic device. In this way, the third-party application on the electronic device may send, within the valid duration of the access token, an access request for data to a resource server by using the access token, to request to access data authorized by the user.

It can be learned from the foregoing descriptions that, according to an OAuth 2.0 protocol, authorization on the third-party application is generally implemented based on a synchronization mechanism, that is, only synchronous authorization on a single device is supported. In other words, sending of the authorization request by the electronic device, returning of the authorization page and the authorization code by the authorization server, and the like all need to depend on the current authorization interface. As a result, authorization on the third-party application can be completed only on the same electronic device. However, a wearable device like a smartwatch or a smart band has a small display and poor display and touch control capabilities. This affects display of the authorization page, and affects authorization on the third-party application on the wearable device like the smartwatch or the smart band, resulting in poor user experience.

Based on this, in an embodiment of this application, the OAuth 2.0 protocol may be extended, so that an authorization server may provide a plurality of interfaces to support asynchronous authorization. Asynchronous authorization means that an electronic device (namely, a second electronic device) having a large-size display, for example, a mobile phone or a tablet computer, is used to perform authorization on a third-party application on a wearable device (namely, a first electronic device) having a small-size display, for example, a smartwatch or a smart band. Therefore, in asynchronous authorization, an authorization page provided by the authorization server may be displayed in the second electronic device having the large-size display. This helps a user perform asynchronous authorization on the third-party application on the first electronic device based on the authorization page displayed by the second electronic device, thereby improving efficiency of authorizing the third-party application on the first electronic device, improving user experience, and having strong ease of use and practicability.

In an example, the OAuth 2.0 protocol may be extended, so that the authorization server provides at least four interfaces (namely, an interface 1, an interface 2, an interface 3, and an interface 4), to implement asynchronous authorization on the third-party application on the first electronic device through the four interfaces. For example, the interface 1 may be an interface "/oauth2/v3/device/code", the interface 2 may be an interface "/oauth2/v3/device/authorize", the interface 3 may be an interface "/oauth2/v3/device/authorize_confirm", and the interface 4 may be an interface "/oauth2/v3/device/async".

It should be understood that the foregoing four interfaces provided by the authorization server, an interface name corresponding to each interface, and the like are merely examples for explanation, and should not be understood as a limitation on embodiments of this application. In embodiments of this application, persons skilled in the art may determine a quantity of interfaces, an interface name, and the like based on an actual requirement.

The following separately describes the four interfaces.

The interface 1 (for example, the interface "/oauth2/v3/device/code") may be invoked by the first electronic device, and is configured to obtain information such as a device code (device code), a user code (user code), and a uniform resource locator (Uniform Resource Locator, URL) corresponding to the authorization page. To be specific, when the third-party application on the first electronic device needs to obtain a user authorization, the first electronic device may send a device code request to the authorization server by invoking the interface 1, to request to obtain a current device code and a user code of the third-party application, the URL corresponding to the authorization page, and the like. For example, the first electronic device may invoke the interface 1 in a post manner to send the device code request to the authorization server.

It should be noted that a request parameter required by the interface 1 may include client_id=<client identifier of the third-party application>&scope=<permission that needs to be granted to the third-party application>&userid=<user identifier>. The user identifier may be an identifier of a resource owner, namely, an identifier of a user to which data requested by the third-party application belongs.

For example, after obtaining the device code request of the first electronic device through the interface 1, the authorization server may generate the current device code and user code of the third-party application, and determine the URL corresponding to the authorization page, a generation time of the user code, an expiration time of the device code, an expiration time of the user code, and the like, and may establish storage space, to associatively store, in the storage space, information such as the user code, the generation time of the user code, the expiration time of the user code, the device code, the expiration time of the device code, the client identifier of the third-party application, the permission that needs to be granted to the third-party application, and the user identifier. During storage, the authorization server may store, in the storage space as a value in a key-value form by using the user code as a key, information such as the generation time of the user code, the expiration time of the user code, the device code, the expiration time of the device code, the client identifier of the third-party application, the permission that needs to be granted to the third-party application, and the user identifier.

It should be understood that the storage space may be cache space in the authorization server, or may be storage space in a database corresponding to the authorization server. In other words, the information such as the user code, the generation time of the user code, the expiration time of the user code, the device code, the expiration time of the device code, the client identifier of the third-party application, the permission that needs to be granted to the third-party application, and the user identifier may be stored in a cache of the authorization server, and/or may be stored in the database corresponding to the authorization server.

In addition, the authorization server may return a response result of the device code request to the first electronic device through the interface 1. The response result may include information such as the user code, the generation time of the user code, the expiration time of the user code, the device code, the expiration time of the device code, and the URL corresponding to the authorization page.

For example, the response result returned by the authorization server may be as follows:

```
          {
          "create_time": 1569813512,
          "device_code": "<returned device code device code>",
          "expire_in": 1800,
          "scan_expire_in": 120,
          "user_code": "<returned user code user code>",
          "verification_url": "https://xxx.xxx.xxx/oauth2/v3/device/authorize"
          1
```

Herein, create_time indicates the generation time of the user code, expire_in indicates the expiration time of the device code, scan_expire_in indicates the expiration time of the user code, and verification_url indicates the URL corresponding to the authorization page. Both expire_in and scan_expire_in are in a unit of second, and are based on create_time. The expiration time of the device code indicates a validity period of the device code. To be specific, when the expiration time expires, the device code is invalid, and the third-party application on the first electronic device cannot obtain, by using the device code, an authorization code to access data authorized by the user. In other words, when the expiration time of the device code expires, if the third-party application on the first electronic device still needs to access the data authorized by the user, the third-party application needs to obtain the user authorization again. The expiration time of the user code is similar to the expire time of the device code.

In an example, the authorization server may generate the user code in a random manner. A length of the user code is not limited in embodiments of this application, and may be specifically set by persons skilled in the art based on an actual scenario. For example, persons skilled in the art may set the length of the user code to 8 bits, 10 bits, 11 bits, or the like based on the actual scenario.

In another example, the authorization server may combine information such as the user code and the client identifier of the third-party application in a first combination manner to obtain first combination information, and encrypt the first combination information by using a first encryption algorithm, to generate the device code. For example, information obtained by encrypting the first combination information may be determined as the device code.

It should be noted that the first combination manner and the first encryption algorithm are not specifically limited in embodiments of this application. To be specific, the authorization server may combine the information such as the user code and the client identifier of the third-party application in any combination manner, and may encrypt the first combination information by using any encryption algorithm.

The interface 2 (for example, the interface "/oauth2/v3/device/authorize") may be invoked by the second electronic device, and is configured to obtain the authorization page from the authorization server. To be specific, the second electronic device may invoke the interface 2 to send an authorization page request to the authorization server, to request to obtain the authorization interface. For example, the second electronic device may invoke the interface 2 in a get manner to send the authorization page request to the authorization server.

It should be noted that a request parameter required by the interface 2 may include user_code=<user code user code>.

In an example, after obtaining the authorization page request of the second electronic device through the interface 2, based on the request parameter (namely, the user code), the authorization server may obtain, from the storage space corresponding to the user code, information such as the client identifier of the third-party application and the permission that needs to be granted to the third-party application, and generate the authorization page based on information such as the client identifier of the third-party application and the permission that needs to be granted to the third-party application. Subsequently, the authorization server may return the authorization page to the second electronic device. The second electronic device may display the authorization page. The user may authorize the third-party application on the first electronic device based on the authorization page displayed by the second electronic device.

In another example, after obtaining the authorization page request of the second electronic device, based on the request parameter (namely, the user code), the authorization server may obtain, from the storage space corresponding to the user code, information such as the user identifier, the client identifier of the third-party application, and the permission that needs to be granted to the third-party application, and determine, based on the client identifier of the third-party application and the user identifier, whether the user already authorizes the third-party application.

When the user does not authorize the third-party application, the authorization server may generate the authorization page based on information such as the client identifier of the third-party application and the permission that needs to be granted to the third-party application, and return the authorization page to the second electronic device. When the user already authorizes the third-party application, the authorization server may determine whether a permission already granted by the user is the permission that needs to be granted to the third-party application.

If the permission already granted by the user is the permission that needs to be granted to the third-party application, the authorization server may determine whether the permission already granted by the user falls within a specified validity period. When the permission already granted by the user falls within the specified validity period, the authorization server may determine that the third-party application already obtains the authorization. To be specific, the third-party application may directly access data authorized by the user. In this case, the authorization server does not generate the authorization page to prompt the user for authorization.

If the permission already granted by the user is not the permission that needs to be granted to the third-party application, or the permission already granted by the user expires in the specified validity period, the authorization server may generate the authorization page based on the information such as the client identifier of the third-party application and the permission that needs to be granted to the third-party application, and return the authorization page to the second electronic device.

It should be understood that the specified validity period may be specifically set based on the actual scenario. For example, the specified validity period may be set to any value like 30 days, 90 days, or 180 days.

The interface 3 (for example, the interface "/oauth2/v3/device/authorize_confirm") may be invoked by the second electronic device, and is configured to send, to the authorization server, the permission that the user agrees to grant. For example, when the user taps an "Authorize" button on the authorization page, the second electronic device may invoke the interface 3 to send, to the authorization server, the permission that the user agrees to grant. For example, the second electronic device may invoke the interface 3 in the post manner to send, to the authorization server, the permission that the user agrees to grant.

In an example, a request parameter required by the interface 3 may include scope=<permission that the user agrees to grant>&user_code=<user code user code>.

After obtaining, through the interface 3, the permission that the user agrees to grant and that is sent by the second electronic device, the authorization server may determine, based on the user code in the request parameter, the storage space corresponding to the user code, and store, in the storage space, the permission that the user agrees to grant, that is, associatively store the permission that the user agrees to grant and the current user code of the third-party application.

In another example, a request parameter required by the interface 3 may include client_id=<client identifier of the third-party application>&scope=<permission that the user agrees to grant>&user_code=<user code user code>.

After obtaining, through the interface 3, the permission that the user agrees to grant and that is sent by the second electronic device, the authorization server may perform security verification based on client_id and the user code in the request parameter, that is, may determine, based on the user code in the request parameter, client_id stored in the storage space corresponding to the user code, and determine whether client_id in the request parameter is the same as client_id stored in the storage space, to perform security verification. For example, when client_id in the request parameter is the same as client_id stored in the storage space, the authorization server may determine that current authorization by the user is secure. In this case, the authorization server may store, in the storage space, the permission that the user agrees to grant. When client_id in the request parameter is different from client_id stored in the storage space, the authorization server may determine that current authorization of the user may be insecure. In this case, the authorization server may not store, in the storage space, the permission that the user agrees to grant.

In a possible implementation, the authorization server may further provide an interface 5 (for example, an interface "/oauth2/v3/revoke"). When the user cancels authorization or rejects authorization, the second electronic device may invoke the interface 5 to feed back, to the authorization server, information indicating that the user cancels authorization or rejects authorization. For example, the second electronic device may invoke the interface 5 in the post manner to send, to the authorization server, the information indicating that the user cancels authorization or rejects authorization.

A request parameter required by the interface 5 may include user_code=<user code user code>.

After obtaining, through the interface 5, the information indicating that the user cancels authorization or rejects authorization, the authorization server may determine that authorization fails, and may determine, based on the user code in the request parameter, the storage space corresponding to the user code, and may store, in the storage space, the information indicating that the user cancels authorization or rejects authorization. Therefore, when the first electronic device subsequently sends the authorization code request to the authorization server, the authorization server may send, to the first electronic device, the information indicating that the user cancels authorization or rejects authorization.

In an example, when the user cancels authorization or rejects authorization, the second electronic device may not feed back any information to the authorization server. When the authorization server does not receive, within preset duration, the permission that the user agrees to grant, the authorization server may determine that authorization fails. Therefore, when the first electronic device subsequently sends the authorization code request to the authorization server, the authorization server may return, to the first electronic device, prompt information indicating that authorization fails.

It should be noted that the preset duration may be specifically set by persons skilled in the art based on the actual scenario. This is not limited in embodiments of this application. For example, persons skilled in the art set the preset duration to 60 seconds based on the actual scenario, or set the preset duration to any value like 30 seconds. The preset duration may be calculated from a moment at which the authorization server returns the authorization page to the second electronic device. To be specific, when the authorization server returns the authorization page to the second electronic device, the authorization server may measure duration. When the measured duration reaches 60 seconds or 30 seconds, but the authorization server still does not receive the permission that the user agrees to grant and that is returned through the interface 3, the authorization server may determine that authorization fails.

For example, when the authorization server obtains, through the interface 3, the permission that the user agrees to grant, the authorization server may determine that authorization succeeds. In this case, the authorization server may return, to the second electronic device, prompt information indicating that authorization succeeds. In this way, the second electronic device may display the prompt information to notify the user of an authorization result. For example, the prompt information indicating that authorization succeeds may be "Authorization succeeds", or may be "Account login succeeds".

After obtaining the prompt information indicating that authorization succeeds, the second electronic device may directly display the prompt information on a page, or may pop up a prompt window to display the prompt information.

It may be understood that the permission that the user agrees to grant may be the same as or may be different from the permission that needs to be granted to the third-party application. For example, the user may select, by using the authorization page, all or a part of permissions that need to be granted to the third-party application, to grant permission to the third-party application.

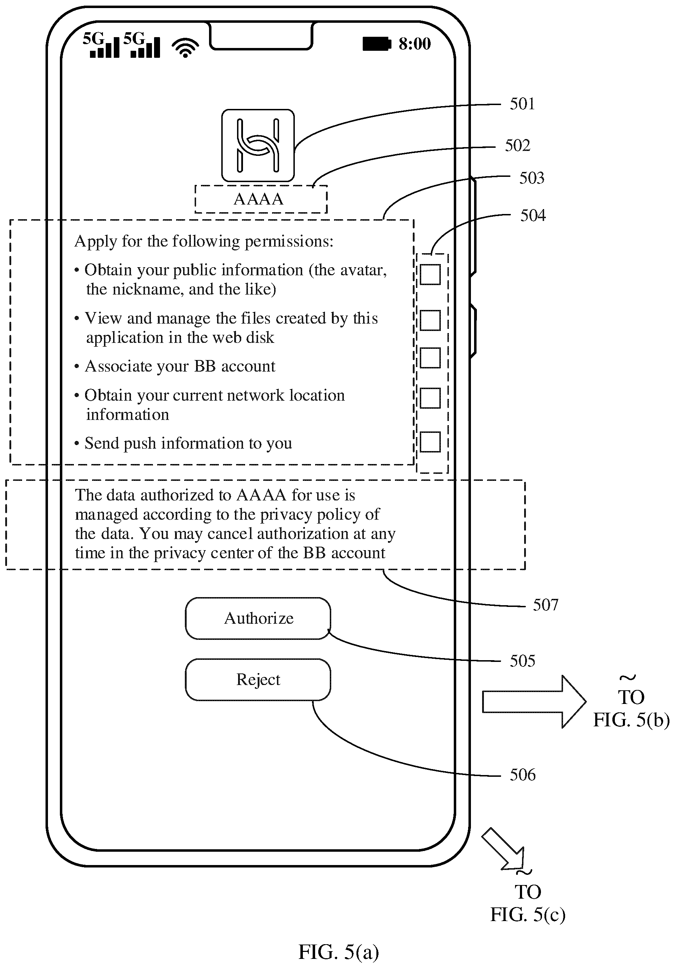

FIG. 5(a) to FIG. 5(c) are an example diagram of an authorization page according to an embodiment of this application.

As shown in FIG. 5(a), the authorization page provided in this embodiment of this application may include an icon 501 and a name 502 (for example, AAAA) of the third-party application, permissions 503 that needs to be granted to the third-party application, a selection button 504 corresponding to each permission, an "Authorize" button 505, a "Reject" button 506, and authorization prompt information 507. The selection button 504 may be used by the user to select a permission that is agreed to be granted to the third-party application.

For example, the permissions 503 that need to be granted to the third-party application may include "Obtain your public information (the avatar, the nickname, and the like)", "View and manage the files created by this application in the web disk", "Associate with your BB account", "Obtain your current network location information", and "Send push information to you". For example, the authorization prompt information 507 may be "The data authorized to AAAA for use is managed according to the privacy policy of the data. You may cancel authorization at any time in the privacy center of the BB account". The BB account is an account corresponding to the user.

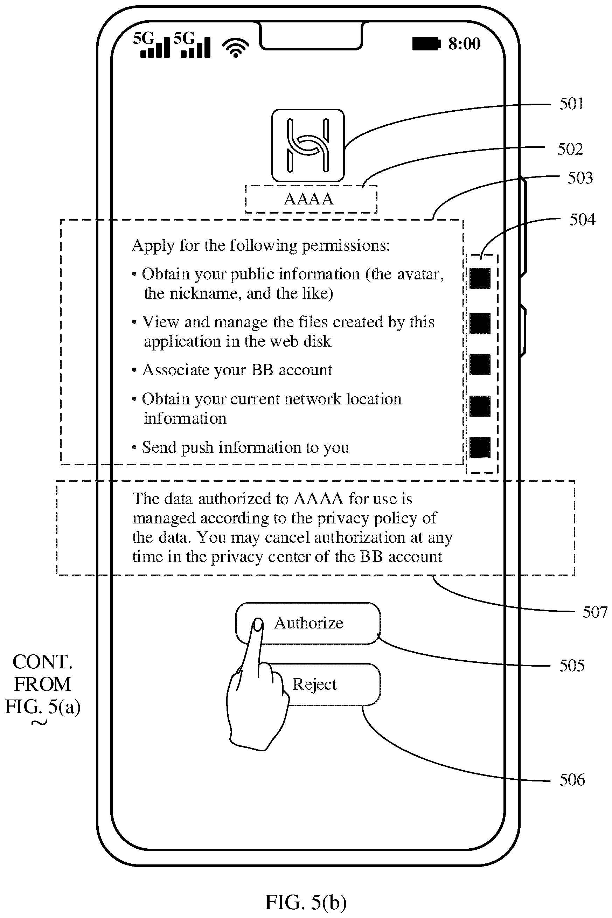

As shown in FIG. 5(b), when the user wants to grant, to the third-party application, all the permissions that need to be granted to the third-party application, the user may select all the permissions on the authorization page, and tap the "Authorize" button 505. In this case, the second electronic device may invoke the interface 3 to send, to the authorization server, the permission that the user agrees to grant, namely, all the permissions that need to be granted to the third-party application. The authorization server may store, in corresponding storage space, the permission that the user agrees to grant, and return, to the second electronic device, prompt information indicating that authorization succeeds.

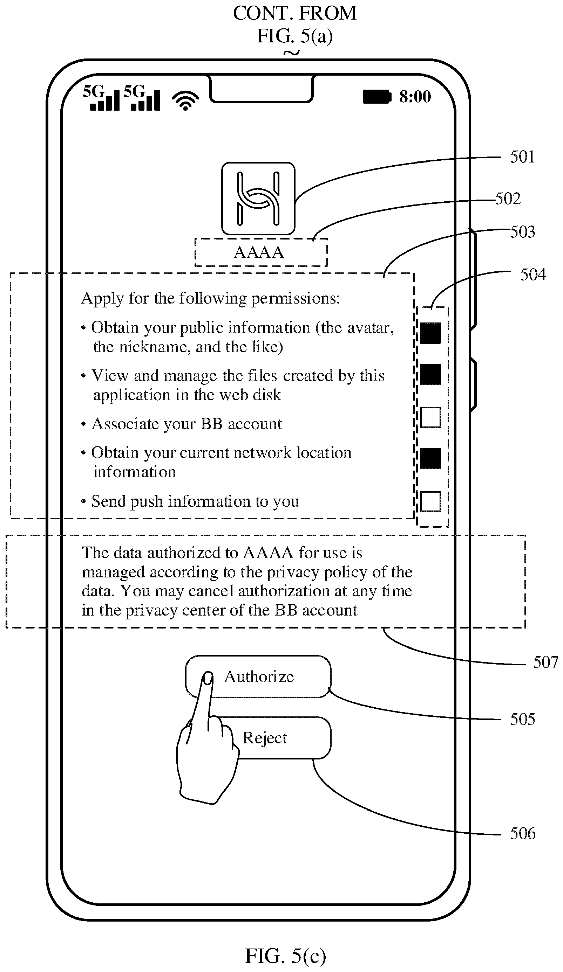

As shown in FIG. 5(c), when the user only wants to grant, to the third-party application, a part of permissions that need to be granted to the third-party application, for example, when the user only wants to grant "Obtain your public information (the avatar, the nickname, and the like)", "View and manage the files created by this application in the web disk", and "Obtain your current network location information", the user may select these permissions on the authorization page, and tap the "Authorize" button 505. In this case, the second electronic device may invoke the interface 3 to send, to the authorization server, the permission that the user agrees to grant (namely, the part of the permissions that need to be granted to the third-party application). The authorization server may store, in corresponding storage space, the permission that the user agrees to grant, and return, to the second electronic device, prompt information indicating that authorization succeeds, for example, return "Authorization succeeds".

It may be understood that, when the user does not want to authorize the third-party application, the user may tap the "Reject" button 506. In this case, the second electronic device may invoke the interface 5 to send, to the authorization server, information indicating that the user rejects authorization. The authorization server may store, in corresponding storage space, the information indicating that the user rejects authorization, and may return, to the second electronic device, prompt information indicating that authorization fails.

The interface 4 (for example, the interface "/oauth2/v3/device/async") may be invoked by the first electronic device, and is configured to obtain the authorization code from the authorization server. To be specific, the first electronic device may invoke the interface 4 to send the authorization code request to the authorization server, to request to obtain the authorization code. In a possible implementation, the first electronic device may invoke the interface 4 in a polling manner, to send the authorization code request to the authorization server. A polling cycle may be specifically set by persons skilled in the art based on the actual scenario. This is not limited in embodiments of this application.

It should be noted that a request parameter required by the interface 4 may include device_code=<device code device code returned by the interface 1>.

After obtaining, through the interface 4, the authorization code request sent by the first electronic device, the authorization server may obtain, based on the device code in the request parameter, the user code corresponding to the device code, that is, may decrypt the device code by using a first encryption algorithm, to obtain decrypted information, and extract the user code from the decrypted information in the first combination manner. Subsequently, the authorization server may determine, based on the user code, whether the user authorization is already obtained, that is, determine, based on the user code, whether the storage space corresponding to the user code stores the permission that the user agrees to grant.

When the storage space corresponding to the user code stores the permission that the user agrees to grant, the authorization server may determine that the user authorization is already obtained. In this case, the authorization server may obtain, based on the user code, the information such as the user identifier, the permission that the user agrees to grant, and the client identifier of the third-party application, and generate the authorization code based on the information such as the user identifier, the permission that the user agrees to grant, and the client identifier of the third-party application. Subsequently, the authorization server may return the generated authorization code to the first electronic device through the interface 4. It should be understood that, when returning the authorization code to the first electronic device, the authorization server may also return information such as an expiration time of the authorization code to the first electronic device. The first electronic device may access, in the expiration time by using the authorization code, data authorized by the user.

In a possible implementation, when the storage space corresponding to the user code does not have the permission that the user agrees to grant, or the storage space corresponding to the user code has the information indicating authorization cancellation or authorization rejection, the authorization server may determine that the user authorization is not obtained. In this case, the authorization server may return, to the first electronic device, the prompt information indicating that authorization fails. For example, the prompt information indicating that authorization fails may be "Authorization is already rejected or canceled", or may be "Authorization fails. Try again after authorization times out".

In another possible implementation, when the storage space corresponding to the user code does not have the permission that the user agrees to grant, the authorization server may determine that the user authorization is not currently obtained. In this case, the authorization server may count a current quantity n of polling times. If the current quantity n of polling times is less than a total quantity N of polling times, the authorization server may return, to the first electronic device, prompt information indicating that authorization is not temporarily performed, or the authorization server may not respond to a current authorization code request, that is, return no information to the first electronic device. If the current quantity n of polling times is equal to a total quantity N of polling times, the authorization server may return, to the first electronic device, the prompt information indicating that authorization fails.

Optionally, when the first electronic device invokes the interface 4 in the polling mode to send the authorization code request to the authorization server, the authorization server may determine, based on the expiration time of the authorization code and the polling cycle, the total quantity N of polling times that corresponds to the first electronic device. For example, the total quantity N of polling times may be less than or equal to (the expiration time of the authorization code)/the polling cycle. It should be understood that both n and N are integers greater than or equal to 1.

It should be noted that the authorization server may generate the authorization code in any manner, and a specific manner may be specifically set based on the actual scenario. For example, the authorization server may combine, in a second combination manner, the information such as the user identifier, the permission that the user agrees to grant, and the client identifier of the third-party application, to obtain second combination information, and encrypt the second combination information by using a second encryption algorithm, to determine, as the authorization code, information obtained through encryption.

The second combination manner and the second encryption algorithm are not specifically limited in embodiments of this application. To be specific, the authorization server may combine the information such as the user identifier, the permission that the user agrees to grant, and the client identifier of the third-party application in any combination manner, and may encrypt the second combination information by using any encryption algorithm. It should be understood that the second combination manner may be the same as or different from the first combination manner. Similarly, the second encryption algorithm may be the same as or different from the first encryption algorithm.

With reference to the accompanying drawings, a specific application scenario, and the foregoing interfaces, the following describes in detail the asynchronous authorization method provided in embodiments of this application.

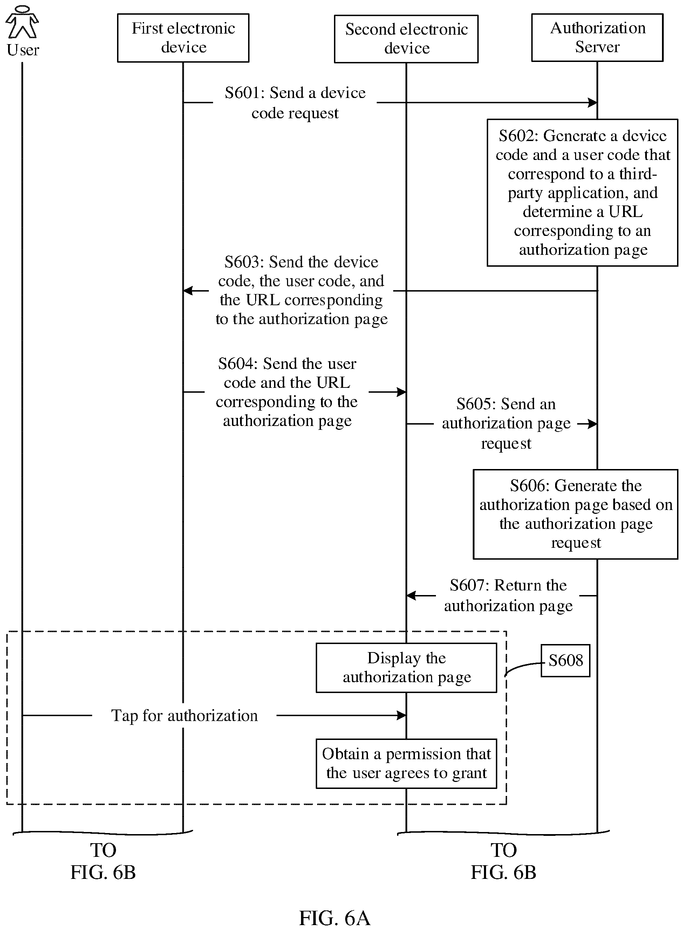

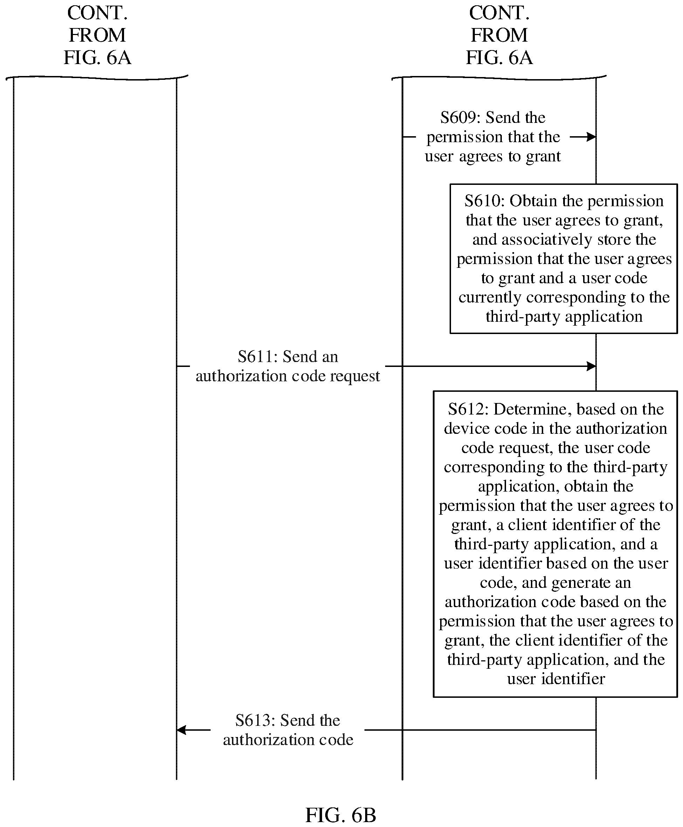

FIG. 6A and FIG. 6B are a schematic flowchart of an asynchronous authorization method according to an embodiment of this application. As shown in FIG. 6A and FIG. 6B, the method may include the following steps.

S601: When a third-party application on a first electronic device needs to obtain a user authorization, the first electronic device sends a device code request to an authorization server.

In an embodiment of this application, the third-party application may be any application on the first electronic device. A user may be any user, for example, may be a user to which the first electronic device belongs.

For example, when the third-party application on the first electronic device needs to access data of the user, and the data is not data owned by the third-party application, for example, when the data is data stored in the authorization server, the first electronic device may determine that the third-party application needs to obtain the user authorization. In this case, the first electronic device may send the device code request to the authorization server. It should be understood that whether the data that the third-party application requests to access requires the user authorization may be specifically set based on an actual scenario. This is not limited in embodiments of this application.

In an example, the first electronic device may use, as a request parameter, a client identifier of the third-party application, a permission that needs to be granted to the third-party application, and a user identifier, to send a device code request to the authorization server by invoking an interface 1 provided by the authorization server, so as to request a device code, a user code, and the like that currently correspond to the third-party application. The permission that needs to be granted to the third-party application may be specifically set by persons skilled in the art based on the actual scenario. For related content of invoking the interface 1 by the first electronic device, refer to the foregoing specific descriptions of the foregoing interface 1. Details are not described herein again.

S602: The authorization server generates, based on the device code request, the device code and the user code that correspond to the third-party application, and determines a URL corresponding to an authorization page.

S603: The authorization server sends, to the first electronic device, the device code, the user code, and the URL corresponding to the authorization page.

For specific content of generating, by the authorization server, the device code and the user code that currently correspond to the third-party application, and determining the URL corresponding to the authorization page, refer to the content of generating, by the authorization server, the device code and the user code that correspond to the third-party application, and determining the URL corresponding to the authorization page in the interface 1. Details are not described herein again.

For example, the authorization server may generate, in a random manner, the user code currently corresponding to the third-party application. A length of the user code may be specifically set by persons skilled in the art based on the actual scenario. For example, the length of the user code may be set to 8 bits, 10 bits, or 11 bits based on the actual scenario.

For example, the authorization server may combine the user code, the client identifier of the third-party application, and the like in a first combination manner, to obtain first combination information.

For example, the authorization server may encrypt the first combination information by using a first encryption algorithm, and determine, as the current device code of the third-party application, information obtained through encryption.

Subsequently, the authorization server may return, to the first electronic device through the interface 1, information such as the user code and the device code that currently correspond to the third-party application, and the URL corresponding to the authorization page.

For specific content of returning, by the authorization server, to the first electronic device through the interface 1, refer to the foregoing response result corresponding to the foregoing interface 1. Details are not described herein again.

S604: The first electronic device sends, to a second electronic device, the user code and the URL corresponding to the authorization page.

In an example, before sending, to the second electronic device, the user code and the URL corresponding to the authorization page, the first electronic device may first determine the second electronic device. Then, the first electronic device may display an authorization guide page based on the determined second electronic device, to guide the user to authorize, on the second electronic device, the third-party application on the first electronic device. For example, when determining that the second electronic device is a mobile phone, the first electronic device may display an authorization guide page with "The account is not authorized. Tap the "To authorize" button to complete authorization on AAAA on the mobile phone". AAAA is the third-party application on the first electronic device.

When the first electronic device detects that the "To authorize" button on the authorization guide page is triggered, the first electronic device may send, to the second electronic device through a communication network (for example, Bluetooth, Wi-Fi, Wi-Fi p2p, or UWB), the user code and the URL corresponding to the authorization page. In addition, the first electronic device may display prompt information A, to prompt the user to authorize the third-party application on the second electronic device. For example, the prompt information A may be "Complete authorization on AAAA on the mobile phone".

A specific process in which the first electronic device determines the second electronic device is described in detail in subsequent content. For details, refer to subsequent descriptions. Details are not described herein again.

S605: The second electronic device sends an authorization page request to the authorization server based on the user code and the URL corresponding to the authorization page, to request the authorization page.

For example, after obtaining the user code and the URL corresponding to the authorization page that are sent by the first electronic device, the second electronic device may determine, based on the URL corresponding to the authorization page, an interface (namely, the foregoing interface 2) for sending the authorization page request to the authorization server. Subsequently, the second electronic device may use the user code as a request parameter, and send the authorization page request to the authorization server by invoking the interface 2.

S606: The authorization server obtains the authorization page request of the second electronic device, and generates the authorization page based on the authorization page request.

S607: The authorization server sends the authorization page to the second electronic device.

It should be understood that, after obtaining the authorization page request of the second electronic device, the authorization server may determine, based on the user code in the request parameter, information such as the permission that needs to be granted to the third-party application and the client identifier of the third-party application, and generate the authorization page based on the permission that needs to be granted to the third-party application, the client identifier of the third-party application, and the like. Then, the authorization server may return the authorization page to the second electronic device through the interface 2.

It should be noted that, for specific content of invoking, by the second electronic device, the interface 2 to send the authorization page request to the authorization server and returning, by the authorization server, the authorization page to the second electronic device through the interface 2, refer to the specific descriptions of the foregoing interface 2. Details are not described herein again.

S608: The second electronic device displays the authorization page, and when the user performs authorization, obtains a permission that the user agrees to grant.

S609: The second electronic device sends, to the authorization server, the permission that the user agrees to grant.

S610: The authorization server obtains the permission that the user agrees to grant, and associatively stores the permission that the user agrees to grant and the user code currently corresponding to the third-party application.

In an embodiment of this application, the second electronic device may be an electronic device in a screen-locked state, or may be an electronic device in an unlocked state. For example, when receiving the authorization page, if the second electronic device is in the unlocked state, the second electronic device may directly display the authorization page on a display interface. When receiving the authorization page, if the second electronic device is in the screen-locked state, the second electronic device may first display an unlocking prompt interface, to prompt the user to unlock the second electronic device, and may display the authorization page on a display interface obtained through correct unlocking.

It should be noted that the authorization page may be shown in FIG. 5(a). To be specific, the authorization page may include an icon 501 and a name 502 of the third-party application, permissions 503 that needs to be granted to the third-party application, a selection button 504 corresponding to each permission, an "Authorize" button 505, a "Reject" button 506, and authorization prompt information 507. The selection button 504 may be used by the user to select a permission that is agreed to be granted to the third-party application. To be specific, the user may grant, to the third-party application by using the authorization page, all or a part of permissions that need to be granted to the third-party application.

For example, the second electronic device may obtain, based on a selection operation of the user on the authorization page, the permission that the user agrees to grant, and may send, to the authorization server, the permission that the user agrees to grant. For example, the second electronic device may use, as a request parameter, the user code and the permission that the user agrees to grant, and send, to the authorization server by invoking an interface 3 provided by the authorization server, the permission that the user agrees to grant. After obtaining, through the interface 3, the permission that the user agrees to grant, the authorization server may determine, based on the user code in the request parameter, storage space corresponding to the user code, and may store, in the storage space corresponding to the user code, the permission that the user agrees to grant.

It should be understood that, for specific content of invoking, by the second electronic device, the interface 3 to send, to the authorization server, the permission that the user agrees to grant, refer to the specific description of the foregoing interface 3. Details are not described herein again.

For example, when the user rejects authorization, for example, when the user taps the "Reject" button on the authorization page, the second electronic device may invoke an interface 5 provided by the authorization server to feed back, to the authorization server, information indicating that the user rejects authorization. For example, the second electronic device may use the user code as a request parameter, and invoke the interface 5 to send, to the authorization server, information indicating that the user rejects authorization. After obtaining the information indicating that the user rejects authorization, the authorization server may determine, based on the user code in the request parameter, storage space corresponding to the user code, and may store, in the storage space, the information indicating that the user rejects authorization. Subsequently, when the first electronic device sends an authorization code request to the authorization server, the authorization server may send, to the first electronic device, the information that indicates that the user rejects authorization and that is stored in the storage space.

For example, when the user rejects authorization, for example, when the user taps a "Reject" button on the authorization page, or when the user does not perform an authorization operation on the authorization page within preset duration, the second electronic device may not feed back any information to the authorization server. In this case, when the authorization server does not receive, within the preset duration, the permission that the user agrees to grant, the authorization server may determine that authorization fails. Subsequently, when the first electronic device sends the authorization code request to the authorization server, the authorization server may determine that authorization fails, and send, to the first electronic device, prompt information indicating that authorization fails.

It should be noted that, when the user rejects authorization, the authorization server may return, to the second electronic device, the prompt information (for example, an authorization failure) indicating that authorization fails. Alternatively, the authorization server may not return any information to the second electronic device, to avoid causing interference to the user to which the second electronic device belongs.

It should be understood that, when the authorization server receives the permission that the user agrees to grant, the authorization server may return, to the second electronic device, prompt information indicating that authorization succeeds. The second electronic device may directly display, by using a page or a prompt window, the prompt information indicating that authorization succeeds, to notify the user of an authorization result. For example, the prompt information indicating that authorization succeeds may be "Authorization succeeds", or may be "Account login succeeds".

S611: The first electronic device sends the authorization code request to an authorization server, to request to obtain an authorization code, where the authorization code request carries the device code corresponding to the third-party application.

For example, after the first electronic device sends, to the second electronic device, the user code and the URL corresponding to the authorization page, the first electronic device may invoke an interface 4 (for example, in a preset polling cycle) to send the authorization code request to the authorization server, to request to obtain the authorization code. To be specific, the first electronic device may use, as a request parameter, the device code currently corresponding to the third-party application, and send the authorization code request to the authorization server by invoking the interface 4.

The preset polling cycle may be specifically set by persons skilled in the art based on the actual scenario. This is not specifically limited in embodiments of this application.

It should be understood that, for specific content of invoking the interface 4 by the first electronic device, refer to the detailed descriptions of the foregoing interface 4. Details are not described herein again.

S612: The authorization server determines, based on the device code in the authorization code request, the user code corresponding to the third-party application, obtains the permission that the user agrees to grant, the client identifier of the third-party application, and the user identifier based on the user code, and generates the authorization code based on the permission that the user agrees to grant, the client identifier of the third-party application, and the user identifier.

S613: The authorization server sends the authorization code to the first electronic device.

For example, after obtaining the authorization code request of the first electronic device, the authorization server may determine the first encryption algorithm used to generate the device code, and decrypt the device code in the request parameter based on a decryption algorithm corresponding to the first encryption algorithm, to obtain decrypted information. Subsequently, the authorization server may determine the first combination manner used to generate the device code, and extract, from the decrypted information based on the first combination manner, the user code currently corresponding to the third-party application.

Subsequently, the authorization server may obtain, based on the user code currently corresponding to the third-party application, information such as the permission that the user agrees to grant, the client identifier of the third-party application, and the user identifier, to generate the authorization code based on the information, and return the generated authorization code to the first electronic device through the interface 4. In this way, the first electronic device can access, by using the authorization code, the data authorized by the user.

It should be noted that the authorization server may generate the authorization code in any manner, and a specific generation manner may be determined by persons skilled in the art based on the actual scenario. This is not limited in embodiments of this application. The data authorized by the user may be the data stored in the authorization server, or may be data stored in another server.

It should be understood that, for specific content of generating, by the authorization server, the authorization code based on the authorization code request received through the interface 4, refer to the specific descriptions of the foregoing interface 4. Details are not described herein again.

In a possible implementation, the authorization server may directly obtain, based on the user code corresponding to the third-party application, the information such as the permission that the user agrees to grant, the client identifier of the third-party application, and the user identifier, and directly generate an access token based on the information. In this way, the third-party application on the first electronic device can directly access, by using the access token, the data authorized by the user. The authorization server may generate the access token in any manner. A specific generation manner may be determined by persons skilled in the art based on the actual scenario. This is not limited in embodiments of this application.

The following describes in detail the process in which the first electronic device determines the second electronic device.

In a possible implementation, the second electronic device may be an electronic device customized by the user. In other words, the first electronic device may determine the second electronic device based on a customized setting of the user. For example, when asynchronous authorization needs to be performed, the user may select the second electronic device, and connect the first electronic device to the second electronic device through the communication network like the Bluetooth, the Wi-Fi, the Wi-Fi p2p, or the UWB.

In another possible implementation, the second electronic device may be determined by the first electronic device by default. Optionally, in an asynchronous authorization process, the first electronic device may determine at least one electronic device A connected to the first electronic device, and obtain a user account logged in to each electronic device A. Subsequently, the first electronic device may determine, from the electronic device A, at least one electronic device B whose user account is a target account, and may determine the second electronic device from the at least one electronic device B. The target account is an account that has an authorization permission for the data that the third-party application requests to access. For example, the target account may be an account of a user to which the data that the third-party application requests to access belongs.

In an example, the first electronic device may obtain a distance between the first electronic device and the electronic device B, and may determine, as the second electronic device, an electronic device B whose distance is less than or equal to a preset distance threshold, or may determine, as the second electronic device, an electronic device B whose distance is smallest, to determine, as the second electronic device based on the distance, an electronic device B that is most likely to be used by the user currently. In this way, the user can conveniently perform asynchronous authorization on the third-party application on the first electronic device by using the second electronic device. This improves authorization efficiency.

The preset distance threshold may be specifically set by persons skilled in the art based on the actual scenario, or may be customized by the user based on an actual requirement. For example, persons skilled in the art may set the preset distance threshold to any value like 50 centimeters, 30 centimeters, or 20 centimeters based on the actual scenario.

It should be understood that the first electronic device may obtain the distance between the first electronic device and the electronic device B by using a ranging function of the first electronic device. For example, when the first electronic device sends the device code request to the authorization server, the first electronic device may enable the ranging function of the first electronic device, to measure the distance between the first electronic device and the electronic device B. Alternatively, the first electronic device may obtain the distance between the first electronic device and the electronic device B by using a ranging function of the electronic device B. For example, when the first electronic device sends the device code request to the authorization server, the first electronic device may send a ranging request to the electronic device B, for example, send a Bluetooth broadcast with a ranging identifier. After receiving the Bluetooth broadcast, the electronic device B may enable the ranging function of the electronic device B, to measure the distance between the first electronic device and the electronic device B, and send the ranged distance to the first electronic device.

It should be noted that the ranging function may be ultra-wideband (ultra-wideband, UWB) ranging, ultrasonic ranging, Bluetooth ranging, or the like. An implementation of the ranging function is not specifically limited in embodiments of this application, and may be specifically set by persons skilled in the art based on the actual scenario.

In another example, the first electronic device may obtain a signal strength of the electronic device B, and may determine, as the second electronic device, an electronic device B whose signal strength is greater than a preset strength threshold, or may determine, as the second electronic device, an electronic device B whose signal strength is greatest, to determine, as the second electronic device based on the signal strength, an electronic device that receives the authorization page most quickly. In this way, the user conveniently performs asynchronous authorization on the third-party application on the first electronic device by using the second electronic device. This improves authorization efficiency.

The preset strength threshold may be specifically set by persons skilled in the art based on the actual scenario, or may be customized by the user based on an actual requirement.

In another example, the first electronic device may obtain a use status of the electronic device B, determine a priority corresponding to each use status, and determine one or more electronic devices B with a highest priority as the second electronic device, to determine, as the second electronic device, an electronic device B that is most likely to be used by the user currently. In this way, the user conveniently performs asynchronous authorization on the third-party application on the first electronic device in time by using the second electronic device. This improves authorization efficiency.

The use status is a state in which the electronic device B is currently used. For example, when the electronic device B currently has a button input, the use status of the electronic device B may be an operated state. For example, when the electronic device B is picked up, the use status of the electronic device B may be a picked-up state.

For example, the use status may be any one of the operated state, the picked-up state, a screen-on state, or another state. The operated state is a state in which the electronic device B has the button input, a touch input, a keyboard input, or a mouse input. The picked-up state is a state in which the electronic device B is picked up. The screen-on state is a state in which a display of the electronic device B is screen-on. The another state is a state other than the operated state, the picked-up state, and the screen-on state, and may include, for example, the screen-locked state.

It should be noted that the priority corresponding to the use status may be specifically set based on the actual scenario. This is not specifically limited in embodiments of this application. For example, the following may be set based on the actual scenario: A priority corresponding to the operated state may be higher than a priority corresponding to the picked-up state, the priority corresponding to the picked-up state may be higher than a priority corresponding to the screen-on state, and the priority corresponding to the screen-on state may be higher than a priority corresponding to the another state.

Therefore, when the electronic device B includes the electronic device in the operated state, the first electronic device may determine the electronic device B in the operated state as the second electronic device. When the electronic device B does not include the electronic device B in the operated state, but includes the electronic device B in the picked-up state, the first electronic device may determine the electronic device B in the picked-up state as the second electronic device. When the electronic device B does not include the electronic device B in the operated state, and does not include the electronic device B in the picked-up state, but includes the electronic device B in the screen-on state, the first electronic device may determine the electronic device B in the screen-on state as the second electronic device. When the electronic device B includes only an electronic device B in the screen-locked state, the first electronic device may determine the electronic device B in the screen-locked state as the second electronic device, and so on.

In an embodiment of this application, the first electronic device may alternatively determine the second electronic device with reference to two or three of a distance, a signal strength, and a use status. For example, an electronic device B whose distance is less than a preset distance threshold and whose signal strength is greater than a preset strength threshold in the electronic device B may be determined as the second electronic device. For example, an electronic device B whose distance is less than a preset distance threshold and whose use status corresponds to a highest priority in the electronic device B may be determined as the second electronic device. For example, an electronic device B whose distance is less than a preset distance threshold, whose signal strength is greater than the preset strength threshold, and whose use status corresponds to a highest priority in the electronic device B may be determined as the second electronic device, and so on.

It should be noted that there may be one or more second electronic devices. When there are a plurality of second electronic devices, the first electronic device may send, to each second electronic device, the user code and the URL corresponding to the authorization page. In this way, each second electronic device may display the authorization page. In this case, the user may authorize the third-party application on the first electronic device by using any second electronic device.

A specific quantity of second electronic devices may be specifically set based on the actual scenario. This is not specifically limited in embodiments of this application.

With reference to a possible application scenario, the following provides example descriptions of the asynchronous authorization method provided in embodiments of this application.

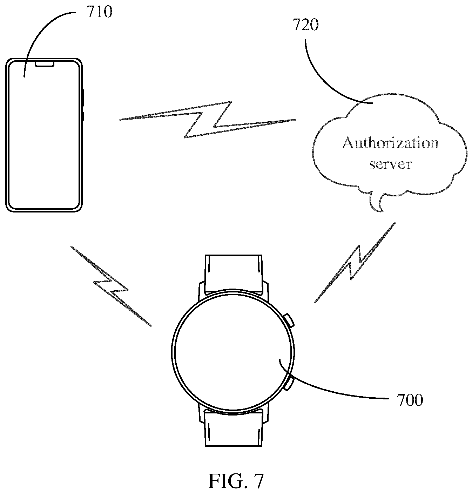

FIG. 7 is a diagram of a structure of a system to which the asynchronous authorization method is applicable according to an embodiment of this application. As shown in FIG. 7, the first electronic device may be a smartwatch 700, the second electronic device may be a mobile phone 710 customized by the user, there is only one second electronic device, and the third-party application may be Boohee health on the smartwatch 700. The smartwatch 700 is connected to the mobile phone 710 by using Bluetooth. The smartwatch 700 may be connected to an authorization server 720 through a communication network. The mobile phone 710 may be connected to the authorization server 720 through a communication network. A server that stores user data may be the authorization server 720.

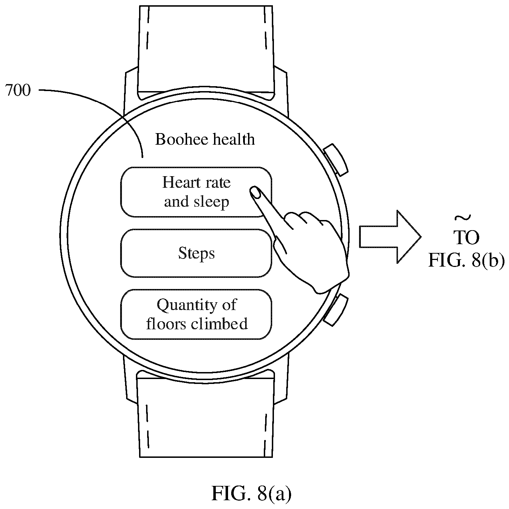

FIG. 8(a) to FIG. 9(f) are diagrams of an application scenario according to an embodiment of this application.

As shown in FIG. 8(a), the user may start Boohee health on the smartwatch 700 to view data. For example, Boohee health may include data such as "Heart rate and sleep", "Steps", and "Quantity of floors climbed". When data to be viewed by the user is not data owned by Boohee health, for example, when data that the user wants to view by using Boohee health is data stored by the user in the authorization server 720, the smartwatch 700 may determine that a user authorization needs to be obtained for viewing the data. It is assumed that "Heart rate and sleep" is data obtained by another terminal device and stored in the authorization server 720. Therefore, when the user wants to view "Heart rate and sleep" by using Boohee health, the smartwatch 700 may determine that the user authorization needs to be obtained. In this case, the smartwatch 700 may send a device code request to the authorization server 720 by invoking an interface 1 provided by the authorization server 720. For specific content of sending the device code request by the smartwatch 700, refer to S601.

After obtaining the device code request, the authorization server 720 may generate a device code and a user code that currently correspond to Boohee health, and determine a URL corresponding to an authorization page. Subsequently, the authorization server 720 may send, to the smartwatch 700, the device code, the user code, and the URL corresponding to the authorization page. For specific content of generating, by the authorization server 720, the device code and the user code that currently correspond to Boohee health, and determining the URL corresponding to the authorization page, refer to S602. For specific content of sending, by the authorization server 720 to the smartwatch 700, the device code, the user code, and the URL corresponding to the authorization page, refer to S603.

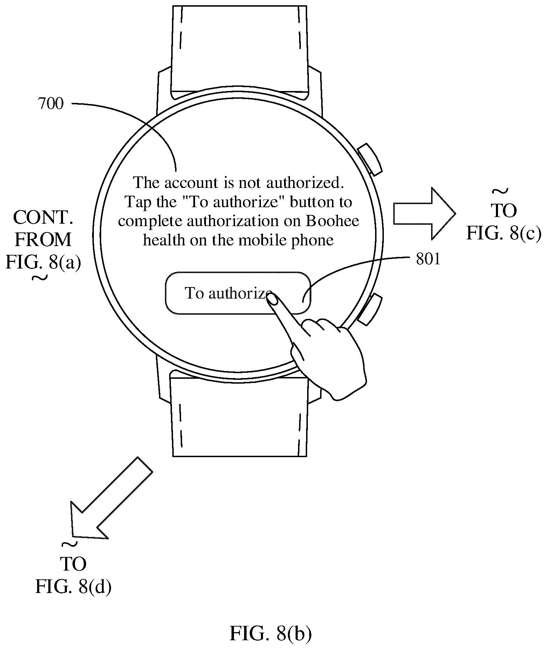

As shown in FIG. 8(b), after the smartwatch 700 sends the device code request to the authorization server 720, the smartwatch 700 may display an authorization guide page on a display interface, to guide the user to the mobile phone 710 to authorize Boohee health. For example, prompt information "The account is not authorized. Tap the "To authorize" button to complete authorization on Boohee health on the mobile phone" and a "To authorize" button 801 may be displayed on the authorization guide page.

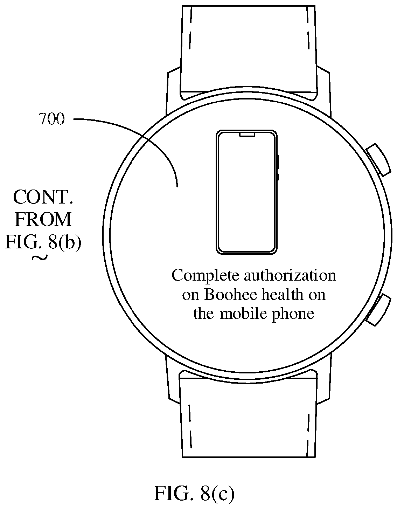

When the smartwatch 700 detects that the "To authorize" button 801 is touched, and receives the user code and the URL corresponding to the authorization page that are returned by the authorization server 720, the smartwatch 700 may send, to the mobile phone 710 by using the Bluetooth, the user code and the URL corresponding to the authorization page. In addition, as shown in FIG. 8(c), the smartwatch 700 may display prompt information "Complete authorization on Boohee health on the mobile phone". For specific content of sending, by the smartwatch 700 to the mobile phone 710, the user code and the URL corresponding to the authorization page, refer to S604.

After obtaining the user code and the URL corresponding to the authorization page, the mobile phone 710 may determine, based on the URL corresponding to the authorization page, to obtain an interface (namely, an interface 2) corresponding to the authorization page, and invoke the interface 2 to send an authorization page request to the authorization server 720. To be specific, the mobile phone 710 may use, as a request parameter, the user code sent by the smartwatch 700, and send the authorization page request to the authorization server 720 by invoking the interface 2. For specific content of sending the authorization page request by the mobile phone 710 to the authorization server 720, refer to S605.

After obtaining the authorization page request sent by the mobile phone 710, the authorization server 720 may determine, based on the user code in the request parameter, a permission that needs to be granted to Boohee health, generate the authorization page based on the permission that needs to be granted to Boohee health and a client identifier of Boohee health, and returns the authorization page to the mobile phone 710 through the interface 2. For specific content of generating, by the authorization server 720, the authorization page, and sending the authorization page to the mobile phone 710, refer to S606 and S607.

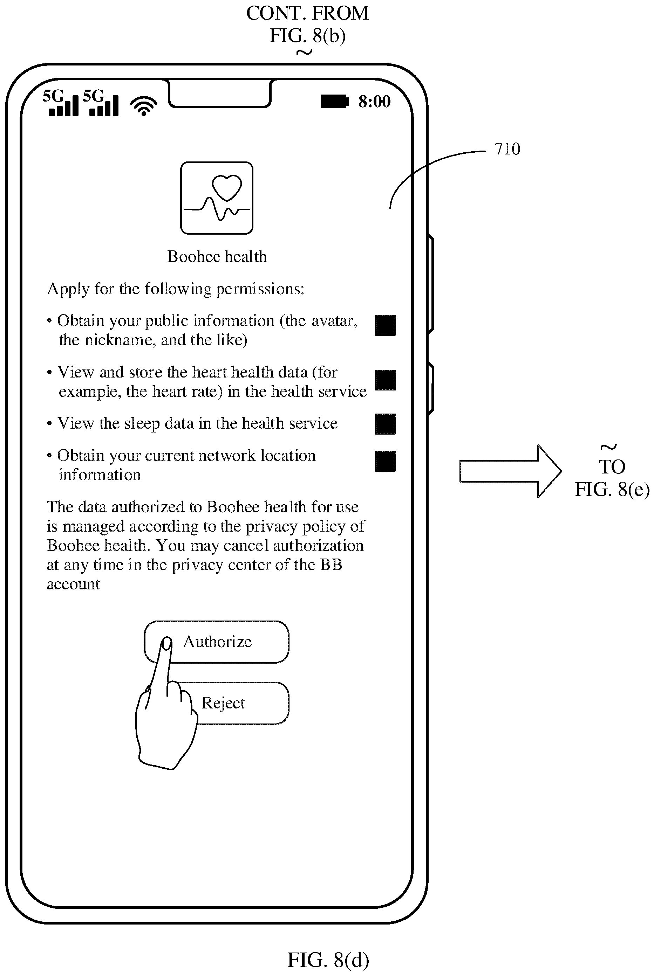

As shown in FIG. 8(d), after obtaining the authorization page, the mobile phone 710 may display the authorization page. The user may authorize Boohee health by using the authorization page on the mobile phone 710. It should be understood that the authorization page displayed by the mobile phone 710 is similar to the authorization page shown in FIG. 5(a) to FIG. 5(c), that is, may include an icon and a name (namely, Boohee health) of Boohee health, the permission that needs to be granted to Boohee health, a selection button corresponding to each permission, an "Authorize" button, a "Reject" button, and authorization prompt information. For example, permissions that need to be granted to Boohee health may include "Obtain your public information (the avatar, the nickname, and the like)", "View and store the heart health data (for example, the heart rate) in the health service", "View sleep data in the health service", "Obtain your current network location information". For example, the authorization prompt information may be "The data authorized to Boohee health for use is managed according to the privacy policy of the data. You may cancel authorization at any time in the privacy center of the BB account". The BB account may be an account of the user. For specific content of displaying the authorization page by the mobile phone 710, refer to S608.

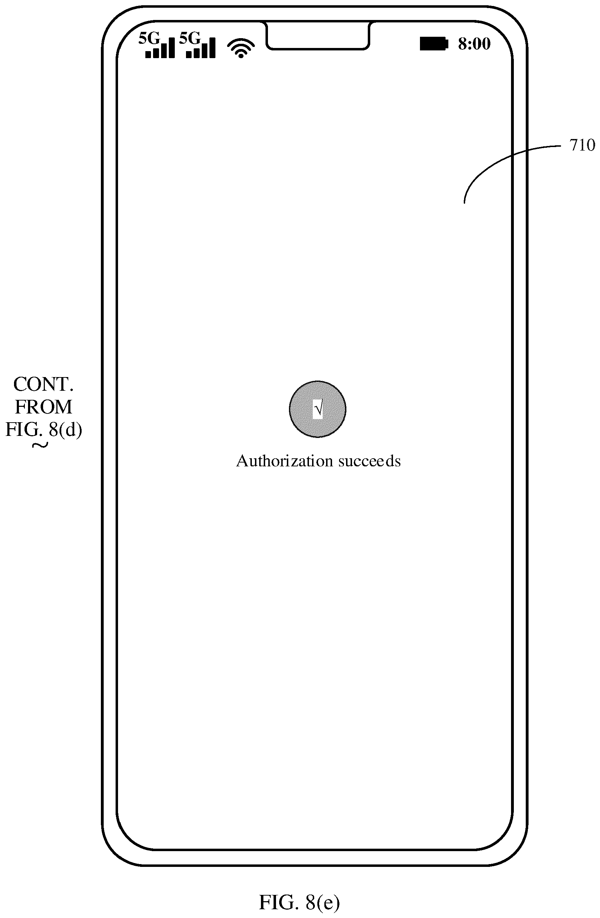

When the user selects all or a part of the permissions for authorization, for example, when the user selects all the permissions and taps the "Authorize" button, the mobile phone 710 may send, to the authorization server 720, a permission that the user agrees to grant. After obtaining the permission that the user agrees to grant, the authorization server 720 may store, in storage space corresponding to the user code, the permission that the user agrees to grant. In addition, the authorization server 720 may determine that authorization succeeds, and return, to the mobile phone 710, prompt information indicating that authorization succeeds. When receiving the prompt information indicating that authorization succeeds, the mobile phone 710 may display the prompt information (for example, authorization success) indicating that authorization succeeds, for example, display, by using a page shown in FIG. 8(e), the prompt information indicating that authorization succeeds. For specific content of sending, by the mobile phone 710 to the authorization server 720, the permission that the user agrees to grant, refer to S609. For specific content of store, by the authorization server 720, the permission that the user agrees to grant, refer to S610.

When the user rejects authorization, for example, when the mobile phone 710 detects that the "Reject" button on the authorization page is triggered, the mobile phone 710 may invoke an interface 5 to send, to the authorization server 720, information indicating that the user rejects authorization.

When the user does not perform authorization within preset duration, the mobile phone 710 may not send any information to the authorization server 720.

After the smartwatch 700 sends, to the mobile phone 710 by using the Bluetooth, the user code and the URL corresponding to the authorization page, the smartwatch 700 may further send an authorization code request to the authorization server 720 by invoking an interface 4 in a polling manner. It should be understood that, for specific content of sending the authorization code request by the smartwatch 700 to the authorization server 720, refer to S611.

After receiving the authorization code request, the authorization server 720 may determine whether the user already performs authorization, that is, determine whether the storage space associated with the user code corresponding to Boohee health includes the permission that the user agrees to grant.

When the permission that the user agrees to grant is included, the authorization server 720 may obtain, based on the user code corresponding to Boohee health, information such as the permission that the user agrees to grant, the client identifier of the third-party application, and the user identifier, generate, based on the information, an authorization code corresponding to Boohee health, and send the authorization code to the smartwatch 700.

For specific content of generating the authorization code by the authorization server 720, refer to S612. For specific content of sending the authorization code by the authorization server 720 to the smartwatch 700, refer to S612.

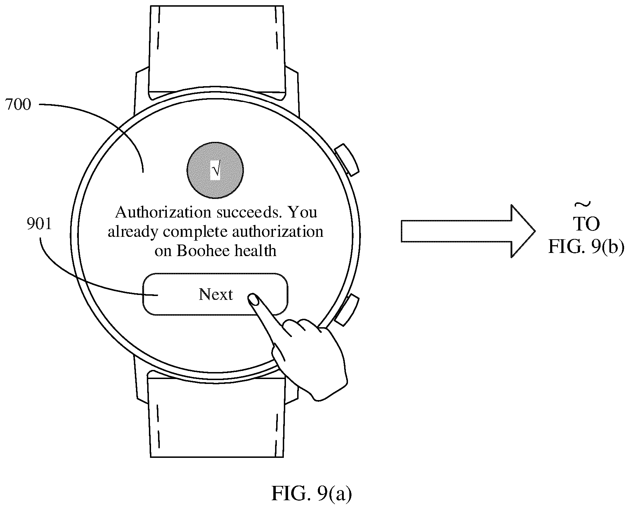

As shown in FIG. 9(a), after obtaining the authorization code returned by the authorization server 720, the smartwatch 700 may determine that Boohee health is successfully authorized. In this case, the smartwatch 700 may display a prompt page indicating that authorization succeeds. For example, prompt information "Authorization succeeds. You already complete authorization on Boohee health" and a "Next" button 901 may be displayed on the prompt page. When the smartwatch 700 detects that the "Next" button 901 is triggered, the smartwatch 700 may obtain, by using the authorization code, data authorized by the user (for example, may exchange an access token with the authorization server by using the authorization code, and obtain, by using the access token, the data authorized by the user), that is, obtain data corresponding to the heart rate and the sleep. For example, the heart rate may be 72 times/minute, and the sleep may be 7 hours and 30 minutes.

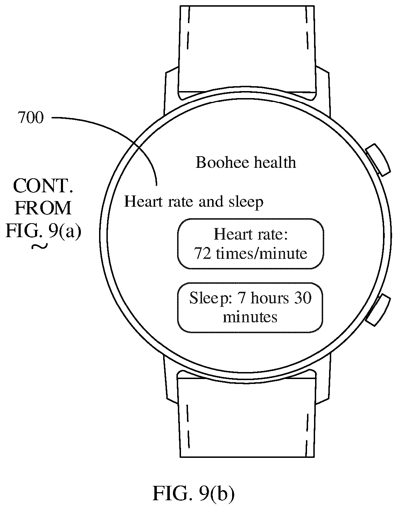

As shown in FIG. 9(b), after obtaining the data corresponding to the heart rate and the sleep, the smartwatch 700 may display the data corresponding to the heart rate and the sleep.

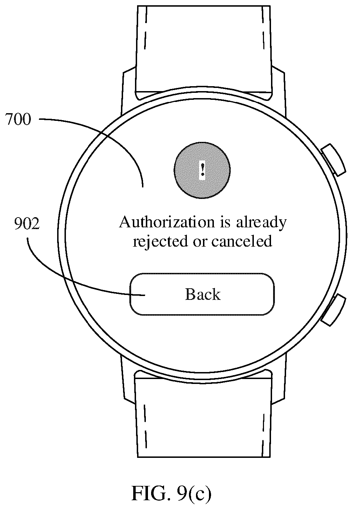

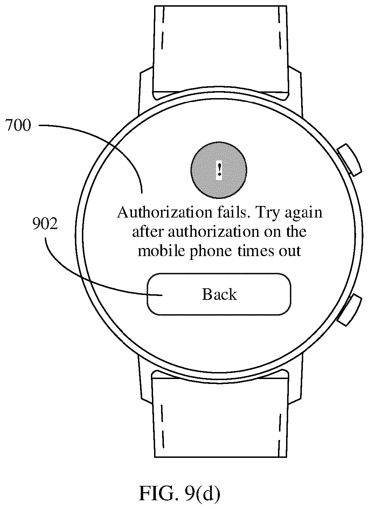

When the permission that the user agrees to grant is not included, and a current quantity n of polling times of the smartwatch 700 reaches a total quantity N of polling times, the authorization server 720 may return, to the smartwatch 700, prompt information indicating that authorization fails. For example, the prompt information indicating that authorization fails may be "Authorization is already rejected or canceled", or may be "Authorization fails. Try again after authorization on the mobile phone times out". As shown in FIG. 9(c) or FIG. 9(d), when receiving the prompt information indicating that authorization fails, the smartwatch 700 may display the prompt information indicating that authorization fails and a "Back" button 902. The "Back" button 902 is used by the user to return to a previous page (for example, a page before the authorization guide page), for example, return to a page shown in FIG. 8(a).

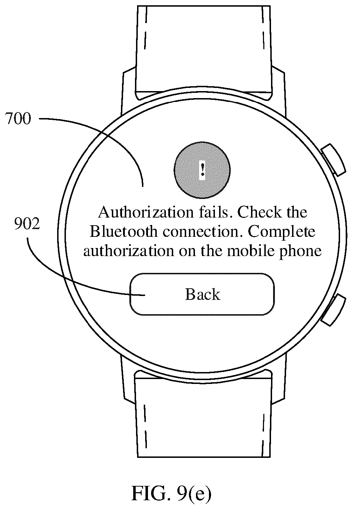

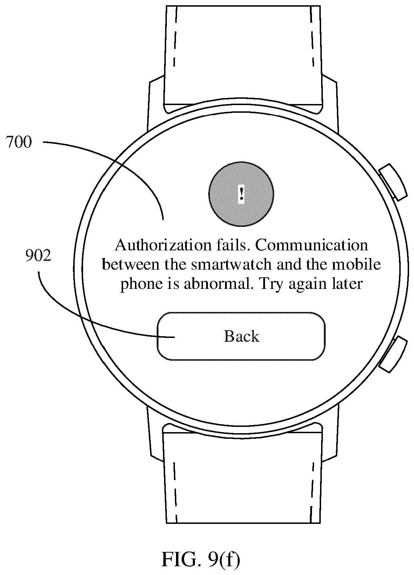

In an authorization process, when the Bluetooth connection between the smartwatch 700 and the mobile phone 710 is disconnected, the smartwatch 700 may display the prompt information indicating that authorization fails. For example, as shown in FIG. 9(e), the smartwatch 700 may display prompt information "Authorization fails. Check the Bluetooth connection and complete authorization on the mobile phone" and the "Back" button 902. Alternatively, as shown in FIG. 9(f), the smartwatch 700 may display "Authorization fails. Communication between the smartwatch and the mobile phone is abnormal. Try again later" and the "back" button 902.

In embodiments of this application, the first electronic device having a small-size display can perform asynchronous authorization on the third-party application on the first electronic device by using the second electronic device having a large-size display. In this way, the second electronic device having the large-size display is used to display the authorization page. Therefore, the user conveniently authorizes the third-party application by using the authorization page displayed on the second electronic device. This can improve convenience of authorizing the third-party application on the first electronic device, improve authorization efficiency, improve user experience, and have high usability and practicability.

It should be understood that sequence numbers of the steps do not mean execution sequences in the foregoing embodiments. The execution sequences of the processes should be determined based on functions and internal logic of the processes, and should not constitute any limitation on the implementation processes of embodiments of this application.

An embodiment of this application further provides an asynchronous authorization apparatus, corresponding to the asynchronous authorization method described in the foregoing embodiment. Modules of the apparatus may correspondingly implement the steps of the asynchronous authorization method.

It should be noted that content such as information exchange and execution processes between the foregoing apparatuses/units are based on a same concept as those in the method embodiments of this application. For specific functions and brought technical effects of the foregoing apparatuses/units, refer to the method embodiments. Details are not described herein again.

It may be clearly understood by persons skilled in the art that, for convenient and brief description, division into the foregoing functional units or modules is merely used as an example for illustration. During actual application, the foregoing functions may be allocated to different functional units or modules for implementation based on a requirement, that is, an inner structure of the apparatus is divided into different functional units or modules to implement all or some of the functions described above. The functional units or modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely for ease of distinguishing between the functional units or modules, but are not intended to limit the protection scope of this application. For a specific working process of the units or modules in the foregoing system, refer to a corresponding process in the foregoing method embodiments. Details are not described herein again.

An embodiment of this application further provides an electronic device. The electronic device includes at least one memory, at least one processor, and a computer program that is stored in the at least one memory and that may be run on the at least one processor. When the processor executes the computer program, the electronic device is enabled to implement the steps in any one of the foregoing method embodiments. For example, a structure of the electronic device may be shown in FIG. 1.

An embodiment of this application further provides a computer-readable storage medium. The computer-readable storage medium stores a computer program. When the computer program is executed by a computer, the computer is enabled to implement the steps in any one of the foregoing method embodiments.

An embodiment of this application provides a computer program product. When the computer program product runs on an electronic device, the electronic device is enabled to implement the steps in any one of the foregoing method embodiments.

When the integrated unit is implemented in the form of the software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code, and the computer program code may be in a source code form, an object code form, an executable file, an intermediate form, or the like. The computer-readable storage medium may include at least any entity or apparatus that can carry computer program code to an apparatus/electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disc. In some jurisdictions, the computer-readable storage medium cannot be an electrical carrier signal or a telecommunication signal according to legislation and patent practices.

In the foregoing embodiments, the descriptions of each embodiment have respective focuses. For a part that is not described in detail or recorded in an embodiment, refer to related descriptions in other embodiments.

Persons of ordinary skill in the art may be aware that units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. An asynchronous authorization system, wherein the system comprises a first electronic device, a second electronic device, and an authorization server;
the first electronic device is configured to send a device code request to the authorization server when a third-party application on the first electronic device needs to obtain a user authorization;
the authorization server is configured to: generate, based on the device code request, a device code and a user code that correspond to the third-party application, and a uniform resource locator URL corresponding to an authorization page, and send, to the first electronic device, the device code, the user code, and the URL corresponding to the authorization page;
the first electronic device is further configured to send, to the second electronic device, the user code and the URL corresponding to the authorization page;
the second electronic device is configured to send an authorization page request to the authorization server based on the user code and the URL corresponding to the authorization page;
the authorization server is further configured to: generate the authorization page based on the authorization page request, and send the authorization page to the second electronic device, wherein the authorization page comprises a permission that needs to be granted to the third-party application and a selection button corresponding to each permission;
the second electronic device is further configured to: display the authorization page, obtain, in response to a selection operation on the permission displayed on the authorization page, a permission that a user agrees to grant, and send, to the authorization server, the permission that the user agrees to grant;
the first electronic device is further configured to send an authorization code request to the authorization server, wherein the authorization code request carries the device code; and
the authorization server is further configured to: after obtaining the authorization code request, determine, based on the device code, the permission that the user agrees to grant, generate an authorization code based on the permission that the user agrees to grant, and send the authorization code to the first electronic device.

2. The system according to claim 1, wherein the authorization server comprises at least a first interface, a second interface, a third interface, and a fourth interface; and
the first interface is configured to send the device code request to the authorization server, the second interface is configured to send the authorization page request to the authorization server, the third interface is configured to send, to the authorization server, the permission that the user agrees to grant, and the fourth interface is configured to send the authorization code request to the authorization server.

3. The system according to claim 1 or 2, wherein the authorization server generates the user code in a random manner.

4. The system according to any one of claims 1 to 3, wherein the device code request carries a client identifier of the third-party application; and the authorization server combines the user code and the client identifier of the third-party application in a preset combination manner, to obtain combination information, and encrypts the combination information by using a preset encryption algorithm, to obtain the device code.

5. The system according to any one of claims 1 to 4, wherein the device code request carries the permission that needs to be granted to the third-party application; and after generating, based on the device code request, the device code, the user code, and the URL corresponding to the authorization page, the authorization server associatively stores the user code, the permission that needs to be granted to the third-party application, and the URL corresponding to the authorization page.

6. The system according to claim 5, wherein the authorization server is further configured to: determine, based on the user code in the authorization page request, the permission that needs to be granted to the third-party application, and generate the authorization page based on the permission that needs to be granted to the third-party application.

7. The system according to any one of claims 1 to 6, wherein the authorization server is specifically configured to: after obtaining the authorization code request, determine the user code based on the device code, determine, based on the user code, the permission that the user agrees to grant, and generate the authorization code based on the permission that the user agrees to grant.

8. The system according to any one of claims 1 to 7, wherein a size of a display of the first electronic device is less than a size of a display of the second electronic device.

9. The system according to any one of claims 1 to 8, wherein a user account for logging in to the second electronic device is a target account, and the target account is an account that has an authorization permission for data that the third-party application requests to access.

10. The system according to any one of claims 1 to 9, wherein a distance between the first electronic device and the second electronic device is less than or equal to a preset distance threshold.

11. An asynchronous authorization method, applied to a first electronic device, wherein the method comprises:
sending a device code request to an authorization server when a third-party application on the first electronic device needs to obtain a user authorization;
obtaining a device code, a user code, and a URL corresponding to an authorization page that are returned by the authorization server, wherein the device code, the user code, and the URL corresponding to the authorization page are determined by the authorization server based on the device code request;
sending, to a second electronic device, the user code and the URL corresponding to the authorization page; and
sending an authorization code request to the authorization server, and obtaining an authorization code returned by the authorization server, wherein the authorization code request carries the device code, wherein
the authorization code is generated by the authorization server based on a permission that a user agrees to grant and that is determined based on the device code after the authorization code request is obtained, the permission that the user agrees to grant is determined by the second electronic device based on a selection operation corresponding to a permission displayed on the authorization page, and the authorization page is generated by the authorization server based on the user code and the URL corresponding to the authorization page that are sent by the second electronic device.

12. The method according to claim 11, wherein the sending, to a second electronic device, the user code and the URL corresponding to the authorization page comprises:
determining the second electronic device, and displaying an authorization guide page based on the second electronic device, wherein the authorization guide page is used to guide the user to the second electronic device for authorization; and
sending, to the second electronic device in response to a confirmation operation detected on the authorization guide page, the user code and the URL corresponding to the authorization page.

13. The method according to claim 12, wherein the determining the second electronic device comprises:
determining at least one third electronic device connected to the first electronic device;
obtaining a user account for logging in to each third electronic device; and
determining, from the third electronic device, at least one fourth electronic device whose user account is a target account, and determining the second electronic device based on the at least one fourth electronic device, wherein the target account is an account that has an authorization permission for data that the third-party application requests to access.

14. The method according to claim 12 or 13, wherein the determining the second electronic device comprises:
determining the at least one third electronic device connected to the first electronic device; and
obtaining a distance between the first electronic device and each third electronic device, and determining, as the second electronic device, a third electronic device whose distance is less than or equal to a preset distance threshold, or determining, as the second electronic device, a third electronic device whose distance is smallest.

15. The method according to any one of claims 12 to 14, wherein the determining the second electronic device comprises:
determining the at least one third electronic device connected to the first electronic device; and
obtaining a signal strength of each third electronic device, and determining, as the second electronic device, a third electronic device whose signal strength is greater than a preset strength threshold, or determining, as the second electronic device, a third electronic device whose signal strength is greatest.

16. The method according to any one of claims 12 to 15, wherein the determining the second electronic device comprises:
determining the at least one third electronic device connected to the first electronic device;
obtaining a use status of each third electronic device, and determining a priority corresponding to each use status; and
determining, as the second electronic device, a third electronic device with a highest priority.

17. An asynchronous authorization method, applied to a second electronic device, wherein the method comprises:
obtaining a user code and a URL corresponding to an authorization page that are sent by a first electronic device, wherein the user code and the URL corresponding to the authorization page are determined by an authorization server based on a device code request of the first electronic device, and the device code request is sent by the first electronic device to the authorization server when it is determined that a third-party application on the first electronic device needs to obtain a user authorization;
sending an authorization page request to the authorization server based on the user code and the URL corresponding to the authorization page;
obtaining an authorization page returned by the authorization server based on the authorization page request, wherein the authorization page comprises a permission that needs to be granted to the third-party application and a selection button corresponding to each permission;
displaying the authorization page, and obtaining, in response to a selection operation on the permission displayed on the authorization page, a permission that a user agrees to grant; and
sending, to the authorization server, the permission that the user agrees to grant, wherein the permission that the user agrees to grant is used by the authorization server to generate an authorization code corresponding to the third-party application.

18. An electronic device, comprising a memory, a processor, and a computer program that can be run on the processor and that is stored in the memory, wherein when the processor executes the computer program, the electronic device is enabled to implement the asynchronous authorization method according to any one of claims 11 to 16, or implement the asynchronous authorization method according to claim 17.

19. A computer-readable storage medium, wherein the computer-readable storage medium stores a computer program, and when the computer program is executed by a computer, the computer is enabled to implement the asynchronous authorization method according to any one of claims 11 to 16, or implement the asynchronous authorization method according to claim 17.

20. A computer program product, wherein when the computer program product runs on an electronic device, the electronic device is enabled to perform the asynchronous authorization method according to any one of claims 11 to 16, or perform the asynchronous authorization method according to claim 17.
